# EUROPEAN PATENT APPLICATION

(11) **EP 4 716 126 A1**
(43) Date of publication of application: **25.03.2026**
(21) Application number: 24830578.1
(22) Date of filing: 18.06.2024
(51) Int. Cl.: H04L 1/00

(54) **DATA TRANSMISSION METHOD AND COMMUNICATION DEVICE**

(30) Priority: 28.06.2023 CN 202310781929
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); LI, Chenwan, Shenzhen, Guangdong 518129 (CN); QIN, Yi, Shenzhen, Guangdong 518129 (CN)
(74) Representative: Goddar, Heinz J.
(86) International application number: PCT/CN2024/099962
(87) International publication number: WO 2025/001932

(57) **Abstract**

This application provides a data transmission method and a communication apparatus. The method includes: A first communication apparatus obtains first data and second data, where the first data supports transmission error correction based on a meaning represented by data, and the second data does not support transmission error correction based on a meaning represented by data. The first communication apparatus sends encoded data to a second communication apparatus, where the encoded data is obtained by encoding a transport block, the transport block includes the first data and the second data, a code rate of the first data is a first code rate, a code rate of the second data is a second code rate, and the first code rate is greater than the second code rate. In this way, data transmission efficiency can be improved, and a resource waste can be reduced.

## Description

This application claims priority to Chinese Patent Application No. 202310781929.1, filed with the China National Intellectual Property Administration on June 28, 2023 and entitled "DATA TRANSMISSION METHOD AND COMMUNICATION APPARATUS", which is incorporated herein by reference in its entirety.

### TECHNICAL FIELD

This application relates to the communication field, and more specifically, to a data transmission method and a communication apparatus.

### BACKGROUND

In a communication system, a transmit end performs channel encoding on data, so that a receive end can detect and correct a transmission error of the data caused by impact of interference, fading, or the like during channel transmission. Although channel encoding can implement a transmission error of data in a channel, a maximum transmission rate of error-free transmission in the channel is limited by a channel capacity limit specified by the Shannon theorem.

A semantic communication technology is a technology that combines communication and deep learning and that emerges with development of deep learning, so that a transmission rate of a communication network can be improved. The semantic communication technology focuses on a meaning represented by transmitted data. Even if the data is affected by interference, fading, or the like and there is an incorrectly transmitted bit that cannot be corrected through channel encoding, the semantic communication technology may restore the data based on a meaning represented by a correctly decoded data bit in the data.

However, service data corresponding to the semantic communication technology and some data that does not support the semantic communication technology may be transferred together to a physical layer for air interface transmission, for example, signaling data, or a protocol stack packet header added after each layer of a protocol stack processes the service data corresponding to the semantic communication technology. In this case, a corresponding transmission solution is further required for how to support semantic communication in a current communication network to improve data transmission performance.

### SUMMARY

Embodiments of this application provide a data transmission method and a communication apparatus, so that data transmission efficiency can be improved, and a resource waste can be reduced.

According to a first aspect, a data transmission method is provided. The method may be performed by a communication device or an apparatus (for example, a module, a chip, or a chip system) configured (or used) in the communication device. The following uses an example in which a first communication apparatus performs the method for description. For example, the first communication apparatus may be a network device or may be configured in the network device.

The method includes: The first communication apparatus obtains first data and second data, where the first data supports transmission error correction based on a meaning represented by data, and the second data does not support transmission error correction based on a meaning represented by data. The first communication apparatus sends encoded data to a second communication apparatus, where the encoded data is obtained by encoding a transport block, the transport block includes the first data and the second data, a code rate of the first data is a first code rate, a code rate of the second data is a second code rate, and the first code rate is greater than the second code rate.

According to the foregoing solution, compared with non-error-tolerant data (namely, data that does not support transmission error correction based on a meaning represented by data), error-tolerant data (namely, data that supports transmission error correction based on a meaning represented by data) has a stronger capability of overcoming impact of channel interference, fading, and the like. Therefore, a transmit end (namely, the first communication apparatus) performs differentiated encoding on the error-tolerant data and the non-error-tolerant data in the transport block, and transmits the transport block encoded by using different code rates, so that in a case of ensuring transmission reliability, a resource waste caused by unnecessary encoded redundant data can be reduced, and transmission efficiency of the transport block can be improved.

With reference to the first aspect, in some implementations of the first aspect, the method includes: The first communication apparatus sends first indication information and second indication information to the second communication apparatus, where the first indication information indicates the first code rate, and the second indication information indicates the second code rate.

According to the foregoing implementation, the transmit end provides, to a receive end (namely, the second communication apparatus), code rates of channel coding respectively used for the error-tolerant data and the non-error-tolerant data in the transport block, so that the receive end performs decoding based on corresponding code rates, to reduce a case in which data transmission fails because the transmit end and the receive end do not reach a consensus on the code rates.

With reference to the first aspect, in some implementations of the first aspect, the method further includes: The first communication apparatus sends third indication information to the second communication apparatus, where the third indication information indicates the first data and/or the second data in the transport block.

According to the foregoing implementation, the transmit end notifies the receive end of a location of the first data and/or a location of the second data in the transport block by using the third indication information, so that the receive end can determine the location of the first data and the location of the second data in the transport block based on the third indication information, and perform decoding by using corresponding code rates, to obtain the first data and the second data. This can reduce a case in which data transmission fails because the transmit end and the receive end do not reach a consensus on a location of the error-tolerant data and a location of the non-error-tolerant data in the transport block.

An indication manner implemented for the third indication information to indicate the first data and/or the second data may include but is not limited to the following examples:
Example 1: The third indication information specifically indicates a length of the first data and/or a length of the second data.

According to this example, the third indication information directly indicates the length of the data, so that the location of the data is indicated with higher precision and higher accuracy.

Example 2: The third indication information specifically indicates a first identifier in a plurality of identifiers, the plurality of identifiers correspond to a plurality of lengths, and a length corresponding to the first identifier is a length of the first data or a length of the second data.

Example 3: The third indication information specifically indicates a proportion of the first data in the transport block, and/or indicates a proportion of the second data in the transport block.

Example 4: The third indication information specifically indicates a second identifier in a plurality of identifiers, the plurality of identifiers correspond to a plurality of proportions, and a proportion corresponding to the second identifier is a proportion of the first data in the transport block or a proportion of the second data in the transport block.

According to Example 2 to Example 4, the third indication information indicates the identifier corresponding to the length of the data, the proportion of the data in the transport block, or the identifier corresponding to the proportion of the data in the transport block, so that overheads of the third indication information can be reduced.

With reference to the first aspect, in some implementations of the first aspect, obtaining the first data and the second data includes: The first communication apparatus receives one or more data packets from a third communication apparatus, where the one or more data packets include at least one first data packet, the first data packet includes data that supports transmission error correction based on a meaning represented by data, the first data packet carries fourth indication information, and the fourth indication information indicates the data that supports transmission error correction based on a meaning represented by data and/or data that does not support transmission error correction based on a meaning represented by data in the first data packet. The first communication apparatus determines the first data and the second data based on the one or more data packets and the fourth indication information carried in the at least one first data packet, where the first data includes data, in the one or more data packets, that supports transmission error correction based on a meaning represented by data, and the second data includes data, in the one or more data packets, that does not support transmission error correction based on a meaning represented by data.

By way of an example but not a limitation, the first communication apparatus may be an access network node, and the third communication apparatus may be a core network element.

According to the foregoing implementation, when transferring the at least one data packet to the second communication apparatus, the third communication apparatus may notify the second communication apparatus of error-tolerant data and non-error-tolerant data in the data packet by using the fourth indication information carried in the data packet, so that the second communication apparatus can distinguish between the error-tolerant data and the non-error-tolerant data, thereby implementing differentiated encoding on the error-tolerant data and the non-error-tolerant data.

With reference to the first aspect, in some implementations of the first aspect, the first communication apparatus obtains third data based on the second data through a first protocol layer module, where the third data includes the second data and a CRC sequence corresponding to the second data, and the transport block specifically includes the first data and the third data.

By way of an example but not a limitation, the first protocol layer module is a medium access control (medium access control, MAC) layer module or a radio link control (radio link control, RLC) layer module.

According to the foregoing implementation, the transmit end may add a CRC sequence to the non-error-tolerant data through the first protocol layer module, so that the receive end can determine, based on the CRC sequence, whether the non-error-tolerant data is correctly transmitted.

With reference to the first aspect, in some implementations of the first aspect, the method further includes: The first communication apparatus encodes the third data through the first protocol layer module by using a third code rate, to obtain fourth data, where the transport block specifically includes the first data and the fourth data. The first communication apparatus obtains the transport block from the first protocol layer module through a second protocol layer module. The first communication apparatus encodes the transport block through the second protocol layer module by using the first code rate, to obtain the encoded data, where the second code rate is determined by using the first code rate and the third code rate.

By way of an example but not a limitation, the second protocol layer module is a physical layer module.

According to the foregoing implementation, after the non-error-tolerant data is separately channel-encoded by the first protocol layer module and the second protocol layer module of the transmit end for one time, the error-tolerant data is channel-encoded only by the second protocol layer module for one time, so that differentiated encoding based on different error correction capabilities of the error-tolerant data and the non-error-tolerant data can be implemented.

With reference to the first aspect, in some implementations of the first aspect, the method further includes: The first communication apparatus obtains fifth indication information and the transport block from the first protocol layer module through a second protocol layer module, where the fifth indication information indicates the first data and/or the third data in the transport block. The first communication apparatus encodes the first data through the second protocol layer module by using the first code rate, and encodes the third data by using the second code rate, to obtain the encoded data.

According to the foregoing implementation, the second protocol layer module obtains the fifth indication information from the first protocol layer module, to obtain the first data and the third data in the transport block, and encodes the first data and the third data based on different code rates, so that the transmit end can perform differentiated encoding on error-tolerant data and non-error-tolerant data with different error correction capabilities.

With reference to the first aspect, in some implementations of the first aspect, the transport block includes at least one data unit, and the at least one data unit includes a signaling field and a data field. The first data includes a data field of a first data unit in the at least one data unit, and the data field of the first data unit supports transmission error correction based on an information meaning represented by data. The second data includes a first part and a second part, the first part includes a data unit other than the first data unit in the at least one data unit, and the second part includes a signaling field of the first data unit. In addition, the method further includes: The first communication apparatus obtains a first CRC sequence based on the first part through the first protocol layer module. The first communication apparatus obtains a CRC sequence of each sub signaling through the first protocol layer module based on each signaling field in the second part. The CRC sequence corresponding to the second data includes the first CRC sequence and the CRC sequence of each sub signaling field in the second part.

According to the foregoing implementation, the transmit end may separately add CRC sequences to different types of fields in the second data, so that the receive end can determine, based on the CRC sequences, whether corresponding non-error-tolerant data is correctly transmitted, and feed back the non-error-tolerant data to the transmit end. In this way, when a part of non-error-tolerant data is not correctly transmitted, the transmit end can retransmit the part of non-error-tolerant data that is not correctly transmitted, so that transmission overheads can be reduced, and resource utilization can be improved.

With reference to the first aspect, in some implementations of the first aspect, the transport block includes a first field and a second field, the first field includes the first data, the second field includes the second data, and the method further includes: The first communication apparatus obtains a second CRC sequence through the first protocol layer module based on the second field, where the second CRC sequence is a CRC sequence corresponding to the second data.

According to the foregoing implementation, the transmit end may integrally-add one CRC sequence to the second data, so that implementation complexity of the transmit end can be reduced, and processing efficiency can be improved.

With reference to the first aspect, in some implementations of the first aspect, the method further includes: The first communication apparatus obtains sixth indication information and the transport block from a first protocol layer module through a second protocol layer module, where the sixth indication information indicates the first data and/or the second data in the transport block. The first communication apparatus obtains third data based on the second data through the second protocol layer module, where the third data includes the second data and a CRC sequence corresponding to the second data. The first communication apparatus encodes the first data through the second protocol layer module by using the first code rate, and encodes the third data by using the second code rate, to obtain the encoded data.

According to the foregoing implementation, the transmit end may obtain the sixth indication information from the first protocol layer module through the second protocol layer module (for example, the physical layer module), determine the first data and the second data in the transport block, add the CRC sequence to the second data through the second protocol layer module, perform channel encoding on the first data and the second data to which the CRC sequence is added by using different code rates, and implement differentiated encoding on the error-tolerant data and the non-error-tolerant data through the second protocol layer module.

According to a second aspect, a data transmission method is provided. The method may be performed by a communication device or an apparatus (for example, a module, a chip, or a chip system) configured (or used) in the communication device. The following uses an example in which a second communication apparatus performs the method for description. For example, the second communication apparatus may be a terminal or may be configured in the terminal.

The method includes: The second communication apparatus receives encoded data, where the encoded data is obtained by encoding a transport block, the transport block includes first data and second data, the first data supports transmission error correction based on an information meaning represented by data, the second data does not support transmission error correction based on an information meaning represented by data, a code rate of the first data is a first code rate, a code rate of the second data is a second code rate, and the first code rate is greater than the second code rate. The second communication apparatus decodes the encoded data, to obtain the first data and the second data in the transport block.

According to the foregoing solution, compared with non-error-tolerant data (namely, data that does not support transmission error correction based on a meaning represented by data), error-tolerant data (namely, data that supports transmission error correction based on a meaning represented by data) has a stronger capability of overcoming impact of channel interference, fading, and the like. Therefore, a transmit end (namely, a first communication apparatus) performs differentiated encoding on the error-tolerant data and the non-error-tolerant data in the transport block, and transmits the transport block encoded by using different code rates, so that in a case of ensuring transmission reliability, a resource waste caused by unnecessary encoded redundant data can be reduced, and transmission efficiency of the transport block can be improved.

It may be understood that for beneficial effect of the features corresponding to the first aspect in the second aspect to the ninth aspect, refer to related descriptions in the first aspect. Details are not described herein again.

With reference to the second aspect, in some implementations of the second aspect, the method includes: The second communication apparatus receives first indication information and second indication information from the first communication apparatus, where the first indication information indicates the first code rate, and the second indication information indicates the second code rate.

With reference to the second aspect, in some implementations of the second aspect, the method further includes: The second communication apparatus receives third indication information from the second communication apparatus, where the third indication information indicates the first data and/or the second data in the transport block.

An indication manner in which the third indication information implements the first data and/or the second data may include but is not limited to the following examples:
Example 1: The third indication information specifically indicates a length of the first data and/or a length of the third data.

Example 2: The third indication information specifically indicates a first identifier in a plurality of identifiers, the plurality of identifiers correspond to a plurality of lengths, and a length corresponding to the first identifier is a length of the first data or a length of the third data.

Example 3: The third indication information specifically indicates a proportion of the first data in the transport block, and/or indicates a proportion of the third data in the transport block.

Example 4: The third indication information specifically indicates a second identifier in a plurality of identifiers, the plurality of identifiers correspond to a plurality of proportions, and a proportion corresponding to the second identifier is a proportion of the first data in the transport block or a proportion of the third data in the transport block.

With reference to the second aspect, in some implementations of the second aspect, the method further includes: The second communication apparatus decodes the encoded data through a second protocol layer module by using the first code rate, to obtain the transport block, where the transport block includes the first data and fourth data. The second communication apparatus decodes the fourth data through the first protocol layer module by using a third code rate, to obtain the second data and a CRC sequence corresponding to the second data, where the second code rate is determined by using the first code rate and the third code rate.

By way of an example but not a limitation, the first protocol layer module is a medium access control MAC layer module or a radio link control RLC layer module, and/or the second protocol layer module is a physical layer module.

With reference to the second aspect, in some implementations of the second aspect, the method further includes: The second communication apparatus decodes sixth data in the encoded data through a second protocol layer module by using the first code rate, to obtain the first data. The second communication apparatus decodes seventh data in the encoded data through the second protocol layer module by using the second code rate, to obtain third data, where the third data includes the second data and a CRC sequence corresponding to the second data.

With reference to the second aspect, in some implementations of the second aspect, the method further includes: The second communication apparatus determines, through the first protocol layer module based on the CRC sequence corresponding to the second data and the second data, whether the second data is correctly transmitted.

With reference to the second aspect, in some implementations of the second aspect, the method further includes: The second communication apparatus determines, through the second protocol layer module based on the CRC sequence corresponding to the second data and the second data, whether the second data is correctly transmitted.

According to a third aspect, a communication apparatus is provided. In a design, the apparatus may include modules that are in one-to-one correspondence with the methods/operations/steps/actions according to any one of the first aspect or the implementations of the first aspect. The module may be implemented by a hardware circuit, software, or a combination of a hardware circuit and software. In a design, the apparatus includes: a processing unit, configured to obtain first data and second data, where the first data supports transmission error correction based on a meaning represented by data, and the second data does not support transmission error correction based on a meaning represented by data; and a transceiver unit, configured to send encoded data to a second communication apparatus, where the encoded data is obtained by encoding a transport block, the transport block includes the first data and the second data, a code rate of the first data is a first code rate, a code rate of the second data is a second code rate, and the first code rate is greater than the second code rate.

With reference to the third aspect, in some implementations of the third aspect, the transceiver unit is further configured to send first indication information and second indication information to the second communication apparatus, where the first indication information indicates the first code rate, and the second indication information indicates the second code rate.

With reference to the third aspect, in some implementations of the third aspect, the transceiver unit is further configured to send third indication information to the second communication apparatus, where the third indication information indicates the first data and/or the second data in the transport block.

The transceiver unit is further configured to the third indication information specifically indicates a length of the first data and/or a length of the second data; or the third indication information specifically indicates a first identifier in a plurality of identifiers, the plurality of identifiers correspond to a plurality of lengths, and a length corresponding to the first identifier is a length of the first data or a length of the second data; or the third indication information specifically indicates a proportion of the first data in the transport block, and/or indicates a proportion of the second data in the transport block; or the third indication information specifically indicates a second identifier in a plurality of identifiers, the plurality of identifiers correspond to a plurality of proportions, and a proportion corresponding to the second identifier is a proportion of the first data in the transport block or a proportion of the second data in the transport block.

With reference to the third aspect, in some implementations of the third aspect, the transceiver unit is further configured to receive one or more data packets from a third communication apparatus, where the one or more data packets include at least one first data packet, the first data packet includes data that supports transmission error correction based on a meaning represented by data, the first data packet carries fourth indication information, and the fourth indication information indicates the data that supports transmission error correction based on a meaning represented by data and/or data that does not support transmission error correction based on a meaning represented by data in the first data packet. The processing unit is further configured to determine the first data and the second data based on the one or more data packets and the fourth indication information carried in the at least one first data packet, where the first data includes data, in the one or more data packets, that supports transmission error correction based on a meaning represented by data, and the second data includes data, in the one or more data packets, that does not support transmission error correction based on a meaning represented by data.

With reference to the third aspect, in some implementations of the third aspect, the processing unit is further configured to obtain third data based on the second data through a first protocol layer module, where the third data includes the second data and a CRC sequence corresponding to the second data, and the transport block specifically includes the first data and the third data.

With reference to the third aspect, in some implementations of the third aspect, the processing unit is further configured to encode the third data through the first protocol layer module by using a third code rate, to obtain fourth data, where the transport block specifically includes the first data and the fourth data. In addition, the processing unit is further configured to: obtain the transport block from the first protocol layer module through a second protocol layer module, and encode the transport block through the second protocol layer module by using the first code rate, to obtain the encoded data, where the second code rate is determined by using the first code rate and the third code rate.

With reference to the third aspect, in some implementations of the third aspect, the processing unit is further configured to obtain fifth indication information and the transport block from the first protocol layer module through a second protocol layer module, where the fifth indication information indicates the first data and/or the third data in the transport block. The processing unit is further configured to encode the first data through the second protocol layer module by using the first code rate, and encode the third data by using the second code rate, to obtain the encoded data.

With reference to the third aspect, in some implementations of the third aspect, the processing unit is further configured to obtain sixth indication information and the transport block from a first protocol layer module through a second protocol layer module, where the sixth indication information indicates the first data and/or the second data in the transport block. The processing unit is further configured to obtain third data based on the second data through the second protocol layer module, where the third data includes the second data and a CRC sequence corresponding to the second data. In addition, the processing unit encodes the first data through the second protocol layer module by using the first code rate, and encode the third data by using the second code rate, to obtain the encoded data.

With reference to the third aspect, in some implementations of the third aspect, the first protocol layer module is a medium access control MAC layer module or a radio link control RLC layer module, and/or the second protocol layer module is a physical layer module.

According to a fourth aspect, a communication apparatus is provided. In a design, the apparatus may include modules that are in one-to-one correspondence with the methods/operations/steps/actions according to any one of the second aspect or the implementations of the second aspect. The module may be implemented by a hardware circuit, software, or a combination of a hardware circuit and software. In a design, the apparatus includes a transceiver unit, configured to receive encoded data from a first communication apparatus, where the encoded data is obtained by encoding a transport block, the transport block includes first data and second data, the first data supports transmission error correction based on an information meaning represented by data, the second data does not support transmission error correction based on an information meaning represented by data, a code rate of the first data is a first code rate, a code rate of the second data is a second code rate, and the first code rate is greater than the second code rate; and a processing unit, configured to decode the encoded data, to obtain the first data and the second data in the transport block.

With reference to the fourth aspect, in some implementations of the fourth aspect, the transceiver unit is further configured to receive first indication information and second indication information from the first communication apparatus, where the first indication information indicates the first code rate, and the second indication information indicates the second code rate.

With reference to the fourth aspect, in some implementations of the fourth aspect, the transceiver unit is further configured to receive third indication information from a second communication apparatus, where the third indication information indicates the first data and/or the second data in the transport block.

With reference to the fourth aspect, in some implementations of the fourth aspect, the third indication information specifically indicates a length of the first data and/or a length of the second data; or the third indication information specifically indicates a first identifier in a plurality of identifiers, the plurality of identifiers correspond to a plurality of lengths, and a length corresponding to the first identifier is a length of the first data or a length of the second data; or the third indication information specifically indicates a proportion of the first data in the transport block, and/or indicates a proportion of the second data in the transport block; or the third indication information specifically indicates a second identifier in a plurality of identifiers, the plurality of identifiers correspond to a plurality of proportions, and a proportion corresponding to the second identifier is a proportion of the first data in the transport block or a proportion of the second data in the transport block.

With reference to the fourth aspect, in some implementations of the fourth aspect, the processing unit is further configured to decode the encoded data through a second protocol layer module by using the first code rate, to obtain the transport block, where the transport block includes the first data and fourth data. The processing unit is further configured to: obtain the transport block from the second protocol layer module through the first protocol layer module, and decode the fourth data through the first protocol layer module by using a third code rate, to obtain the second data and a CRC sequence corresponding to the second data, where the second code rate is determined by using the first code rate and the third code rate.

With reference to the fourth aspect, in some implementations of the fourth aspect, the processing unit is further configured to decode sixth data in the encoded data through a second protocol layer module by using the first code rate, to obtain the first data. The processing unit is further configured to decode seventh data in the encoded data through the second protocol layer module by using the second code rate, to obtain third data, where the third data includes the second data and a CRC sequence corresponding to the second data.

With reference to the fourth aspect, in some implementations of the fourth aspect, the processing unit is further configured to determine, through the second protocol layer module based on the CRC sequence corresponding to the second data and the second data, whether the second data is correctly transmitted.

With reference to the fourth aspect, in some implementations of the fourth aspect, the processing unit is further configured to determine, through the first protocol layer module based on the CRC sequence corresponding to the second data and the second data, whether the second data is correctly transmitted.

With reference to the fourth aspect, in some implementations of the fourth aspect, the first protocol layer module is a medium access control MAC layer module or a radio link control RLC layer module, and/or the second protocol layer module is a physical layer module.

According to a fifth aspect, a communication apparatus is provided. The communication apparatus includes a processor. The processor is coupled to a memory, the memory is configured to store instructions, and the processor is configured to execute the instructions in the memory, so that the communication apparatus implements the method according to any one of the first aspect or the second aspect and the possible implementations of the first aspect or the second aspect.

Optionally, the communication apparatus further includes the memory, and may be configured to execute the instructions in the memory, to implement the method according to any one of the first aspect or the second aspect and the possible implementations of the first aspect or the second aspect.

Optionally, the communication apparatus further includes a communication interface, and the processor is coupled to the communication interface. In this embodiment of this application, the communication interface may be a transceiver, a pin, a circuit, a bus, a module, or another type of communication interface. This is not limited.

In an implementation, the communication apparatus is a communication device (for example, a terminal or a network device). When the communication apparatus is the communication device, the communication interface may be a transceiver or an input/output interface.

In another implementation, the communication apparatus is a chip configured in a communication device. When the communication apparatus is the chip configured in the communication device, the communication interface may be an input/output interface.

Optionally, the transceiver may be a transceiver circuit. Optionally, the input/output interface may be an input/output circuit.

According to a sixth aspect, a processor is provided. The processor includes an input circuit, an output circuit, and a processing circuit. The processing circuit is configured to: receive a signal through the input circuit, and transmit a signal through the output circuit, so that the processor performs the method according to any one of the first aspect or the second aspect and the possible implementations of the first aspect or the second aspect.

In a specific implementation process, the processor may be one or more chips, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, a computer program product is provided. The computer program product includes a computer program (which may also be referred to as code or instructions). When the computer program is run, a computer is enabled to perform the method according to any one of the first aspect or the second aspect and the possible implementations of the first aspect or the second aspect.

According to an eighth aspect, a computer-readable storage medium is provided. The computer-readable storage medium stores a computer program (which may also be referred to as code or instructions). When the computer program is run on a computer, the computer is enabled to perform the method according to any one of the first aspect or the second aspect and the possible implementations of the first aspect or the second aspect.

According to a ninth aspect, a communication system is provided. The communication system includes at least one communication apparatus according to the third aspect and at least one communication apparatus according to the fourth aspect.

### BRIEF DESCRIPTION OF DRAWINGS

FIG. 1 is a diagram of an architecture of a communication system to which embodiments of this application are applicable;
FIG. 2 is a diagram of a data transmission processing procedure for downlink data at protocol layers according to an embodiment of this application;
FIG. 3 is a schematic flowchart of performing encapsulation processing on data at a protocol layer according to an embodiment of this application;
FIG. 4 is a diagram of a transport block processing procedure at a physical layer according to an embodiment of this application;
FIG. 5 is a schematic flowchart of a data transmission method according to an embodiment of this application;
FIG. 6 to FIG. 10 are different diagrams of a data transmission method according to an embodiment of this application;
FIG. 11 is another schematic flowchart of a data transmission method according to an embodiment of this application;
FIG. 12 is a diagram of transport block reassembly according to an embodiment of this application;
FIG. 13 is a block diagram of an example of a communication apparatus according to an embodiment of this application; and
FIG. 14 is a diagram of a structure of another example of a communication apparatus according to an embodiment of this application.

### DESCRIPTION OF EMBODIMENTS

The following describes technical solutions of this application with reference to accompanying drawings.

In embodiments of this application, "/" may represent an "or" relationship between associated objects. For example, A/B may represent A or B. "And/or" may be used to indicate that there are three relationships between associated objects. For example, A and/or B may represent the following three cases: Only A exists, both A and B exist, and only B exists, where A and B may be singular or plural. For ease of describing the technical solutions in embodiments of this application, terms such as "first" and "second" may be used for differentiation in embodiments of this application. The terms such as "first" and "second" do not limit a quantity and an execution sequence, and the terms such as "first" and "second" do not limit a definite difference. In embodiments of this application, the word such as "example" or "for example" represents an example, evidence, or a description. Any embodiment or design solution described as "example" or "for example" should not be explained as being more preferred or having more advantages than another embodiment or design solution. A word such as "example" or "for example" is intended to present a related concept in a specific manner for ease of understanding. In embodiments of this application, "at least one (type)" may alternatively be described as "one (type) or more (types)", and "a plurality of (types)" may be two (types), three (types), four (types), or more (types). This is not limited in embodiments of this application.

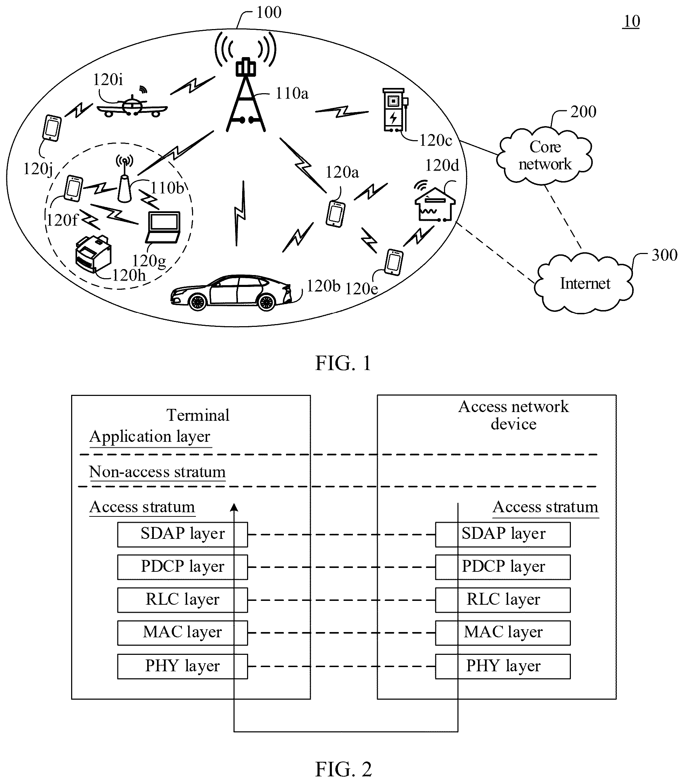

FIG. 1 is a diagram of a communication system to which embodiments of this application are applicable. As shown in FIG. 1, the communication system 10 includes a radio access network (radio access network, RAN) 100 and a core network (core network, CN) 200. The RAN 100 includes at least one RAN node (for example, 110a and 110b in FIG. 1, which are collectively referred to as 110) and at least one terminal (for example, 120a to 120j in FIG. 1, which are collectively referred to as 120). The RAN 100 may further include another RAN node, for example, a wireless relay device and/or a wireless backhaul device (not shown in FIG. 1). The terminal 120 is connected to the RAN node 110 in a wireless manner. The RAN node 110 is connected to the core network 200 in a wireless or wired manner. A core network device in the core network 200 and the RAN node 110 in the RAN 100 may be different physical devices, or may be a same physical device that integrates a core network logical function and a radio access network logical function.

The RAN 100 may be a cellular system related to a 3rd generation partnership project (3rd generation partnership project, 3GPP), for example, a 4G or 5G mobile communication system, or a future-oriented evolved system (for example, a 6G mobile communication system). The RAN 100 may alternatively be an open access network (open RAN, O-RAN or ORAN), a cloud radio access network (cloud radio access network, CRAN), or a wireless fidelity (wireless fidelity, Wi-Fi) system. The RAN 100 may alternatively be a communication system that integrates two or more of the foregoing systems.

The RAN node 110 may also be referred to as an access network device, a RAN entity, an access node, or the like sometimes, and forms a part of the communication system, to help the terminal implement radio access. A plurality of RAN nodes 110 in the communication system 10 may be nodes of a same type, or may be nodes of different types. In some scenarios, roles of the RAN node 110 and the terminal 120 are relative to each other. For example, the network element 120i in FIG. 1 may be a helicopter or an uncrewed aerial vehicle, and may be configured as a mobile base station. For the terminal 120j that accesses the RAN 100 through the network element 120i, the network element 120i is a base station. However, for the base station 110a, the network element 120i is a terminal. The RAN node 110 and the terminal 120 are both referred to as communication apparatuses sometimes. For example, the network elements 110a and 110b in FIG. 1 may be understood as communication apparatuses having a base station function, and the network elements 120a to 120j may be understood as communication apparatuses having a terminal function.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station (for example, 110a in FIG. 1), a micro base station or an indoor station (for example, 110b in FIG. 1), a relay node or a donor node, or a radio controller in a CRAN scenario. Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). All or some functions of the RAN node in this application may alternatively be implemented by using a software function running on hardware, or may be implemented by using an instantiated virtualization function on a platform (for example, a cloud platform). The RAN node in this application may alternatively be a logic node, a logic module, or software that can implement all or some functions of the RAN node.

In another possible scenario, a plurality of RAN nodes coordinate to assist the terminal in implementing radio access, and different RAN nodes separately implement some functions of the base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit of the CU (or the CU-CP or the CU-UP), the DU, and the RU in this application may be implemented through a software module, a hardware module, or a combination of a software module and a hardware module.

The terminal may also be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, smart grid, smart furniture, smart office, smart wearable, smart transportation, and smart city. The terminal may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It should be understood that in this application, "sending information/data to... (for example, the terminal)" may be understood as that a destination end of the information is the terminal, and may include directly or indirectly sending the information/data to the terminal. "Receiving information/data from... (the terminal)" may be understood as that a source end of the information is the terminal, and may include directly or indirectly receiving the information/data from the terminal. Information/data may undergo necessary processing, for example, changing a format, between the source end for sending the information/data and the destination end. However, the destination end may understand valid information/data from the source end. A similar expression in this application may be understood similarly. Details are not described herein again.

In this application, "sending information/data" indicates only a transferring direction of the information/data, includes direct sending through an air interface, and also includes indirect sending by a processing unit through an air interface. "Sending" may also be understood as "output" of a module interface. "Receiving information/data" indicates only a transferring direction of the information/data, includes direct receiving through an air interface, and also includes indirect receiving by a processing unit through an air interface. "Receiving" may also be understood as "input" of a module interface.

The following describes related technologies and terms in embodiments of this application.

### 1. Current data processing procedure of a communication network

Data transmission between communication devices needs to pass through user plane protocol layers of the communication devices. The following uses downlink data transmission as an example to describe a data transmission procedure in which a network device sends downlink data to a terminal. As shown in FIG. 2, the network device and the terminal each include a service data adaptation protocol (service data adaptation protocol, SDAP) layer, a packet data convergence protocol (packet data convergence protocol, PDCP) layer, a radio link control (radio link control, RLC) layer, a medium access control (medium access control, MAC) layer, and a physical (physical, PHY) layer. The SDAP layer, the PDCP layer, the RLC layer, the MAC layer, and the PHY layer may also be collectively referred to as an access stratum. Because a data transmission direction includes sending or receiving, each layer is further divided into a sending part and a receiving part. For a downlink data transmission procedure, the SDAP layer is responsible for mapping a session from an upper layer to a radio bearer (radio bearer, RB) at a lower layer. For example, the RB is a general term of protocol entities and configurations of different protocol layers configured by the network device for the terminal. The radio bearer includes a PDCP entity and an RLC entity. The PDCP entity is located at the PDCP layer, and the RLC entity is located at the RLC layer. After obtaining data from the upper layer, the PDCP layer transmits the data to the RLC layer and the MAC layer, and then the MAC layer generates a transport block (transport block, TB), and performs wireless transmission through the PHY layer.

The data is correspondingly encapsulated at each layer. The data received by a layer from an upper layer of the layer is referred to as a service data unit (service data unit, SDU) of the layer. After being encapsulated at the layer, the data is converted into a protocol data unit (protocol data unit, PDU) of the layer, and is then transferred to a next layer. For example, data received by the PDCP layer of the network device from an upper layer is referred to as a PDCP SDU, and data sent by the PDCP layer to a lower layer is referred to as a PDCP PDU; data received by the RLC layer from an upper layer is referred to as an RLC SDU, and data sent by the RLC layer to a lower layer is referred to as an RLC PDU; and data received by the MAC layer from an upper layer is referred to as a MAC SDU, and data sent by the MAC layer to a lower layer is referred to as a MAC PDU. The MAC PDU may also be referred to as a transport block (transport block, TB). In a protocol, different protocol layers usually correspond with each other through a channel. For example, the RLC layer corresponds to the MAC layer through a logical channel (logical channel, LCH), the MAC layer corresponds to the PHY layer through a transport channel (transport channel), and a physical channel (physical channel) below the PHY layer is used to correspond to a physical layer of a peer device.

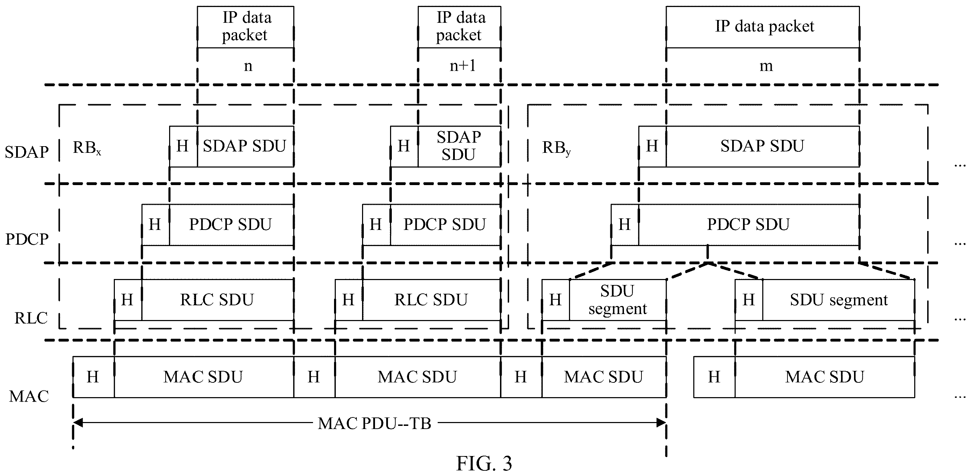

FIG. 3 is a schematic flowchart of performing encapsulation processing on data at a protocol layer. The MAC layer generates a TB by concatenating two RLC PDUs from an RBₓ and one RLC PDU from an RB_{y}. The two RLC PDUs from the RBₓ each correspond to one internet protocol (internet protocol, IP) data packet, namely, an IP data packet n and an IP data packet n+1, and the RLC PDU from the RB_{y} is a segment of an IP data packet m. As described above, the RLC PDU may also be referred to as a MAC SDU. Each protocol layer in the access stratum needs to complete functions of each layer, and transfer an obtained PDU to a lower layer after superimposing a packet header (header, H) of each layer.

The following separately describes a data transmission processing procedure from perspectives of a transmit end and a receive end. The transmit end may be a network device, and the receive end may be a terminal; or the transmit end may be a terminal, and the receive end may be a network device.

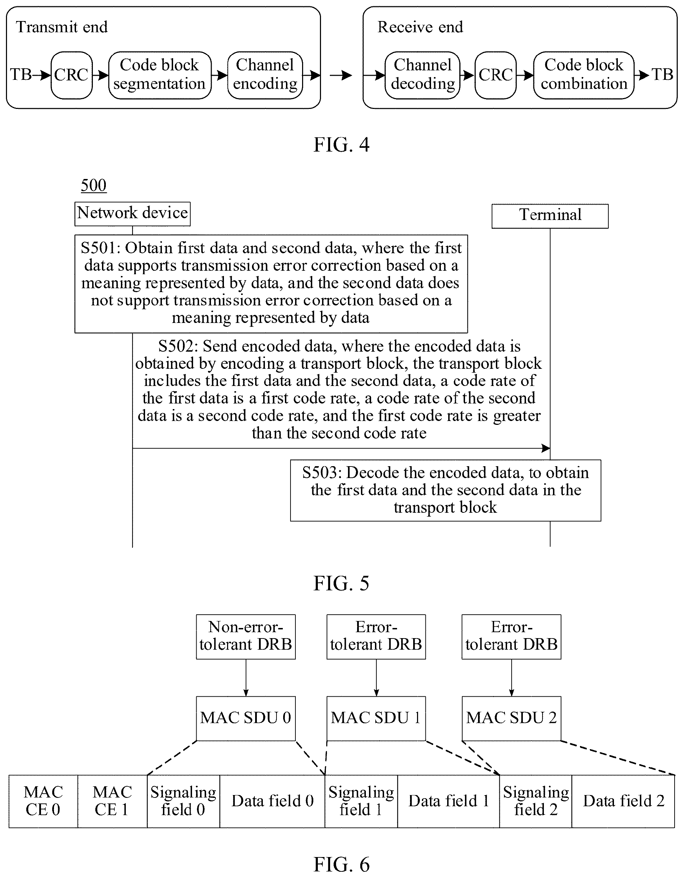

After obtaining a MAC PDU by concatenating a MAC SDU at a MAC layer, the transmit end transmits the MAC PDU to a PHY layer. As shown in FIG. 4, a cyclic redundancy check (cyclic redundancy check, CRC) module at the PHY layer of the transmit end adds a CRC sequence to the MAC PDU (namely, a TB) received from the MAC layer. After adding the CRC sequence to the TB, the transmit end needs to determine a size of the TB. If the size (TB size, TBS) of the TB is excessively large, for example, the TBS is greater than a size of a maximum code block, the transmit end may divide the TB into a plurality of code blocks (code blocks, CB) through a code block segmentation module, and add a CRC sequence to each code block. When the TBS is less than or equal to the size of the maximum code block, the TB does not need to be segmented, the TB is a CB, and no CRC sequence needs to be added. The transmit end performs processing such as channel encoding on each CB in the TB by using a same code rate, and then sends the CB to the receive end. It should be understood that after channel encoding, another module that is not shown in FIG. 4 may be further included. This is not limited in this application.

For the receive end, after performing channel decoding on the received data, a channel decoding module at the PHY layer performs CRC check on CBs. If the CRC check succeeds, the PHY layer may combine the code blocks to obtain a TB, and then deliver the TB to the MAC layer, so that acknowledgment (acknowledge, ACK) information indicating successful receiving may be fed back to the transmit end. If the CRC check fails, it indicates that the CB has an error bit and is not correctly transmitted. The receive end may feed back, to the transmit end, negative acknowledgment (non-acknowledge, NACK) information indicating unsuccessful receiving, and the transmit end may perform retransmission. After obtaining the TB (namely, the MAC PDU) from the PHY layer, the MAC layer demultiplexes the MAC PDU to obtain at least one MAC SDU, and transfers the at least one MAC SDU to the RLC layer through a corresponding LCH for further processing.

It should be understood that a corresponding function of the protocol layer may be implemented by a corresponding protocol layer module in the communication device. For example, a function of the RLC layer may be implemented by an RLC layer module, a function of the MAC layer may be implemented by a MAC layer module, and a function of the PHY layer may be implemented by a PHY layer module.

### 2. Data that supports transmission error correction based on a meaning represented by data

Data that supports transmission error correction based on a meaning represented by data may be referred to as data of a semantic communication service, semantic communication data, data of an error-tolerant service, or error-tolerant data. For ease of description, in this application, the error-tolerant data is mainly used to replace and describe the data that supports transmission error correction based on a meaning represented by data. The data is data that supports transmission error correction based on a meaning represented by data by using a semantic communication technology. In other words, the data can allow transmission errors of some bits affected by interference or fading in a channel transmission process, and the errors cannot be corrected through channel encoding. In this case, the receive end may restore the data based on a meaning represented by a correctly decoded data bit in the data by using the semantic communication technology.

In conventional communication, bit-level or symbol-level transmission accuracy after channel decoding is mainly used as a performance indicator. For example, a bit error ratio (bit error ratio, BER) or a symbol error ratio (symbol error ratio, SER) is used as a main performance indicator. However, the semantic communication technology focuses on how to accurately convey a meaning (that is, semantics) represented by transmitted data. Therefore, the semantic communication technology proposes a new semantic measure indicator based on an actual semantic meaning, to evaluate accuracy of restoration of error-tolerant data.

For example, for a text object, semantic communication performance of the text object may be evaluated by using a most commonly used text generation measure in natural language processing, for example, a bilingual evaluation understudy (bilingual evaluation understudy, BLEU). The BLEU is an algorithm used to evaluate quality of machine translation, and uses an improved precision form, to compare an output text with a plurality of reference sentences translated by language experts. An output result of the BLEU is usually between 0 and 1, and a higher score of a result of the BLEU indicates better translation quality of the BLEU. In this system, a restored text and an original text may be used as references and output texts for natural language processing. A BLEU measure may be used to measure a semantic error between texts.

For another example, for a multimedia object of an image and a video, performance of the multimedia object may be evaluated by using a most commonly used indicator used for image generation and video generation in computer vision, for example, may be evaluated by using a peak-signal-to-noise ratio (peak-signal-to-noise ratio, PSNR). A smaller value of the PSNR indicates more semantic errors in transmission.

In addition to pixel-level similarity measurement, a similarity between two images is measured by using a perceived distance, and a measure consistent with human determining may be used to evaluate quality of the restored image and video, for example, by using a structural similarity index measure (structural similarity index measure, SSIM), a learned perceptual similarity (learned perceptual similarity, LPIPS) measure, and a Fréchet video distance (Fréchet video distance, FVD). The SSIM measure is used as an example. The SSIM measure evaluates the similarity between the two images by introducing a concept of quality perception of a human visual system (human visual system, HVS).

It should be noted that, correcting, based on the meaning represented by the data, the data that is incorrectly transmitted may also be supporting, by using a forward error correction encoding method, the data that is incorrectly transmitted. For example, the forward error correction encoding method may be RaptorQ encoding or Reed-Solomon error correction code (RS code for short).

### 3. Data that does not support transmission error correction based on a meaning represented by data

Data that does not support transmission error correction based on a meaning represented by data may be referred to as data of a non-semantic communication service, non-semantic communication data, data of a non-error-tolerant service, or non-error-tolerant data. For ease of description, in this application, the non-error-tolerant data is mainly used to replace and describe the data that does not support transmission error correction based on a meaning represented by data. The data is data that does not support transmission error correction based on a meaning represented by data by using a semantic communication technology, and needs to be correctly transmitted through channel encoding. If a transmission error exists in some bits in the data and cannot be corrected through channel encoding, a receive end cannot learn of a correct meaning of the data. It may be determined, based on CRC check, whether transmission is correctly performed through channel encoding. For example, after performing channel decoding on received data, the receive end performs CRC check based on a CRC sequence carried in the data. If the check succeeds, it is considered that transmission is correct; or if the check fails, it is considered that transmission fails. Correct transmission of the data may mean that a specific proportion of bits or all bits in the data are correctly transmitted.

For a communication network that currently includes only non-error-tolerant data, a code rate of channel coding that can overcome impact of channel interference, fading, or the like is selected based on an obtained channel characteristic between communication devices, that is, the data may be correctly transmitted. If the receive end determines, after performing channel decoding at the physical layer, that the data is not correctly transmitted due to a channel condition change, the receive end cannot learn of content of an error bit of the data, and the receive end may feed back NACK information to the transmit end, so that the transmit end performs retransmission. When semantic communication is applied in the communication network, as described above, compared with the non-error-tolerant data, the error-tolerant data has a stronger capability of overcoming impact of channel interference, fading, or the like. The error-tolerant data may carry some non-error-tolerant data such as signaling data, and data corresponding to another non-error-tolerant service still exists in the communication network. Therefore, it is inevitable that the error-tolerant data and the non-error-tolerant data need to be transmitted simultaneously. If the error-tolerant data is transmitted by using a code rate that ensures correct transmission of the non-error-tolerant data, an unnecessary encoding redundant bit is added to the error-tolerant data, causing a resource waste. If the non-error-tolerant data is transmitted by using a code rate that ensures correct transmission of the error-tolerant data, transmission reliability of the non-error-tolerant data cannot be ensured. Therefore, this application proposes that the transmit end may perform differentiated encoding on the error-tolerant data and the non-error-tolerant data in the transport block, and transmit transport blocks encoded by using different code rates, so that a resource waste can be reduced, and data transmission reliability can be improved.

FIG. 5 is a schematic flowchart of a data transmission method 500 according to an embodiment of this application. It should be understood that the data transmission method may be performed by two communication apparatuses. The communication apparatus may be configured in a communication device (for example, the communication apparatus may be a module, a chip, or a chip system configured in the communication device), or the communication apparatus may be a communication device (for example, the communication device may be a network device or a terminal). The following uses an example in which the network device and the terminal perform the method 500 for description. The method includes but is not limited to the following steps.

S501: The network device obtains first data and second data, where the first data supports transmission error correction based on a meaning represented by data, and the second data does not support transmission error correction based on a meaning represented by data.

In an implementation, that the network device obtains the first data and the second data may include: The network device receives one or more data packets from a core network element, where the one or more data packets include at least one first data packet, the first data packet is a data packet of an error-tolerant service and may be referred to as an error-tolerant data packet (error-tolerant packet), the first data packet includes error-tolerant data, and the error-tolerant data may be referred to as an error-tolerant payload (error-tolerant payload) of the first data packet. In addition to the error-tolerant data, the first data packet further includes some non-error-tolerant data. For example, signaling data such as a transmission control protocol (transmission control protocol, TCP)/internet protocol (internet protocol, IP) packet header in the first data packet is the non-error-tolerant data. The first data packet carries fourth indication information, and the fourth indication information indicates data that supports transmission error correction based on a meaning represented by data and/or data that does not support transmission error correction based on a meaning represented by data in the first data packet. In other words, the fourth indication information indicates the error-tolerant data or the non-error-tolerant data in the first data packet. The network device determines the first data and the second data based on the one or more data packets from the core network element. The first data includes the error-tolerant data included in the first data packet in the one or more data packets. The second data includes the non-error-tolerant data included in the first data packet in the one or more data packets. If the one or more data packets further include a data packet (denoted as a second data packet) including non-error-tolerant data, the second data further includes data included in the second data packet in the one or more data packets. The second data packet is a data packet corresponding to a non-error-tolerant service, and may be referred to as a non-error-tolerant data packet. The network device may transmit the non-error-tolerant data packet by using a non-error-tolerant data RB (data RB, DRB).

An indication manner in which the fourth indication information indicates the error-tolerant data and/or the non-error-tolerant data may include but is not limited to the following examples:
Example 1: The fourth indication information specifically indicates a length of the error-tolerant data and/or a length of the non-error-tolerant data in the data packet.

For example, the fourth indication information may indicate a quantity of bytes or bits of the error-tolerant data in the data packet. For example, if the length, of the error-tolerant data, indicated by the fourth indication information is N bytes, it may be considered by default that, in a predefined manner, first (or last) N bytes in the data packet are the error-tolerant data, and other data is the non-error-tolerant data. Alternatively, the fourth indication information may indicate a start location of the error-tolerant data. The network device may determine the error-tolerant data in the data packet based on the start location and the length, and other data is the non-error-tolerant data. However, this application is not limited thereto. The fourth indication information may alternatively indicate the length of the non-error-tolerant data, or indicate the length of the error-tolerant data and the length of the non-error-tolerant data. For a specific implementation, refer to a manner in which the fourth indication information indicates the length of the error-tolerant data. Details are not described herein again.

Example 2: The fourth indication information specifically indicates a first identifier in a plurality of identifiers, the plurality of identifiers correspond to a plurality of lengths, and a length corresponding to the first identifier is a length of the error-tolerant data in the data packet or a length of the non-error-tolerant data in the data packet.

For example, a correspondence between the plurality of identifiers and the plurality of lengths may be predefined. For example, the fourth indication information indicates an identifier corresponding to the length of the non-error-tolerant data. The correspondence may be shown in Table 1. The core network element may determine the length of the non-error-tolerant data. If the length is 60, the core network element may determine, based on the correspondence shown in Table 1, that the identifier corresponding to the length is 7, to determine the fourth indication information, the first identifier indicated by the fourth indication information is 7, and the identifier 7 corresponds to 74 bits. Due to a limitation of a length range division granularity, the fourth indication information cannot accurately indicate an actual length, and a 14-bit redundant bit may be padded. Alternatively, 14 bits in the error-tolerant data may be transmitted as the non-error-tolerant data. The non-error-tolerant data described below is transmitted in a transmission manner with higher reliability. Therefore, the error-tolerant data is transmitted in the transmission manner of the non-error-tolerant data and does not affect transmission performance of the error-tolerant data. Further, it may be predefined that the non-error-tolerant data is located at the forefront (or the rearmost end) of the data packet, and the network device may obtain the non-error-tolerant data in the data packet based on the length indicated by the fourth indication information and a predefined location. Alternatively, in another implementation, in the correspondence, each of the plurality of identifiers further corresponds to a start location of one piece of non-error-tolerant data. The network device may determine the start location and the length of the non-error-tolerant data in the data packet based on the first identifier indicated by the fourth indication information, to obtain the non-error-tolerant data. Data other than the error-tolerant data in the data packet is the error-tolerant data. However, this application is not limited thereto. The first identifier indicated by the fourth indication information may alternatively be an identifier corresponding to the length of the error-tolerant data. For a specific implementation, refer to a manner in which the fourth indication information indicates the identifier corresponding to the length of the non-error-tolerant data. Details are not described herein again.

**Table 1**

| Identifier | Length (bit) | Identifier | Length (bit) | Identifier | Length (bit) | Identifier | Length (bit) |
|---|---|---|---|---|---|---|---|
| 0 | 0 | 8 | ≤102 | 16 | ≤1446 | 24 | ≤20516 |
| 1 | ≤10 | 9 | ≤142 | 17 | ≤2014 | 25 | ≤28581 |
| 2 | ≤14 | 10 | ≤198 | 18 | ≤2806 | 26 | ≤39818 |
| 3 | ≤20 | 11 | ≤276 | 19 | ≤3909 | 27 | ≤55474 |
| 4 | ≤28 | 12 | ≤384 | 20 | ≤5446 | 28 | ≤77284 |
| 5 | ≤38 | 13 | ≤535 | 21 | ≤7587 | 29 | ≤107669 |
| 6 | ≤53 | 14 | ≤745 | 22 | ≤10570 | 30 | ≤150000 |
| 7 | ≤74 | 15 | ≤1038 | 23 | ≤14726 | 31 | 150000 |

Example 3: The fourth indication information specifically indicates a proportion of the error-tolerant data in the data packet, and/or indicates a proportion of the non-error-tolerant data in the data packet.

For example, if the fourth indication information may indicate that the proportion of the error-tolerant data in the data packet is 1/2, that is, 0.5, the network device may determine, in a predefined manner, that first (last) 1/2 of data in the data packet is the error-tolerant data, and other data is the non-error-tolerant data. Alternatively, the fourth indication information further indicates a start location of the error-tolerant data, and the network device obtains the error-tolerant data in the data packet based on the start location and the proportion. However, this application is not limited thereto. The fourth indication information may indicate the proportion of the non-error-tolerant data in the data packet, or indicate the proportion of the error-tolerant data and the proportion of the non-error-tolerant data in the data packet. For a specific implementation, refer to the manner in which the fourth indication information indicates the length of the error-tolerant data. Details are not described herein again.

Example 4: The fourth indication information specifically indicates a second identifier in a plurality of identifiers, the plurality of identifiers correspond to a plurality of proportions, and a proportion corresponding to the second identifier is a proportion of the error-tolerant data in the data packet or a proportion of the non-error-tolerant data in the data packet.

For example, the second identifier indicated by the fourth indication information is an identifier corresponding to the proportion of the error-tolerant data in the data packet. For example, in the plurality of identifiers, an identifier 0 corresponds to a proportion 0, an identifier 1 corresponds to a proportion 1/3, an identifier 2 corresponds to a proportion 2/3, and an identifier 3 corresponds to a proportion 1/5. For example, if the second identifier indicated by the fourth indication information is 2, the network device may determine that 2/3 of data in the data packet is the error-tolerant data, and 1/3 of the data is the non-error-tolerant data. The network device may determine specific locations of the error-tolerant data and the non-error-tolerant data in the data packet based on predefined locations of the error-tolerant data and the non-error-tolerant data in the data packet, or based on start locations indicated by the fourth indication information. However, this application is not limited thereto. The second identifier indicated by the fourth indication information may alternatively be an identifier corresponding to the proportion of the non-error-tolerant data in the data packet. Details are not described herein again.

It should be understood that the length, the proportion, the correspondence between the length and the identifier, and the correspondence between the length and the identifier that are shown above to describe the indication manner of the fourth indication information are merely examples. During specific implementation, a corresponding value may be determined based on an implementation requirement. This is not limited in this application.

For example, the core network element may be a user plane function (user plane function, UPF) network element in a core network. The fourth indication information may be carried in a packet header of a user plane part of general packet radio service (general packet radio service, GPRS) tunneling protocol (user plane part of GPRS tunneling protocol, GTP-U).

In another implementation, that the network device obtains the first data and the second data may include: One protocol layer in the network device obtains the first data and the second data from another protocol layer.

The network device may configure, for the terminal, a DRB used to transfer the error-tolerant data. For ease of description, the DRB corresponding to the error-tolerant service is referred to as an error-tolerant DRB below. For example, the error-tolerant DRB may be the DRB corresponding to the error-tolerant service, and is used to transfer the error-tolerant data of the error-tolerant service. For example, the network device may send a radio resource control (radio resource control, RRC) reconfiguration message to the terminal, where the RRC reconfiguration message may include configuration information used to configure the error-tolerant DRB, and the terminal determines a configuration of the error-tolerant DRB based on the configuration information. When the error-tolerant data is transferred in the error-tolerant DRB, a packet header is encapsulated in and added to each protocol layer. The data packet header carries protocol layer signaling data, belonging to the non-error-tolerant data. Therefore, the network device may determine the error-tolerant data and the non-error-tolerant data that are included in the data transferred to an RLC layer module or a MAC layer module in the error-tolerant DRB, to determine the first data and the second data.

Optionally, the network device further configures, for the terminal, a DRB used to transmit the non-error-tolerant data. For ease of description, a DRB corresponding to a non-error-tolerant service is referred to as a non-error-tolerant DRB below. The non-error-tolerant DRB may be the DRB corresponding to the non-error-tolerant service, and is used to transmit non-error-tolerant data of the non-error-tolerant service; or the non-error-tolerant DRB may be a non-error-tolerant DRB corresponding to the error-tolerant service, and is used to transmit non-error-tolerant data related to the error-tolerant service. The first data may further include the data transferred by the non-error-tolerant DRB.

The RRC reconfiguration message (RRCReconfiguration) further includes a cell group configuration (Cell Group configuration). The cell group configuration is configured with an RLC entity and a DRB identifier associated with the RLC entity. A DRB corresponding to the identifier may be an error-tolerant DRB or a non-error-tolerant DRB.

It should be understood that the foregoing two implementations of obtaining the first data and the second data by the network device may be implemented in combination with each other. For example, the network device obtains at least one data packet from the core network element, and obtains error-tolerant data in the at least one data packet. The error-tolerant data may be transferred by using the error-tolerant DRB configured for the terminal, and non-error-tolerant data in the at least one packet may be transferred by using the non-error-tolerant DRB. When the data is transferred to the RLC module or the MAC layer module, the network device determines the first data and the second data. The first data includes error-tolerant data in data transferred in the error-tolerant DRB, and the second data includes non-error-tolerant data (for example, a packet header is generated during transmission in the DRB) included in the data transferred in the error-tolerant DRB, and further includes the data transferred in the non-error-tolerant DRB.

S502: The network device sends encoded data to the terminal, where the encoded data is obtained by encoding a transport block, the transport block includes the first data and the second data, a code rate of the first data is a first code rate, a code rate of the second data is a second code rate, and the first code rate is greater than the second code rate.

After obtaining the transport block including the first data and the second data, the network device encodes the first data by using the first code rate, and encodes the second data by using the second code rate. In other words, the network device encodes the first data in the transport block at a high code rate (namely, the first code rate), and encodes the second data in the transport block at a low code rate (namely, the second code rate). A higher code rate of channel encoding indicates fewer redundant bits added after encoding, and higher resource utilization. In addition to improving transmission reliability of the first data through channel encoding, transmission error correction based on a meaning represented by data is also supported. Therefore, a higher encoding code rate may be used, to reduce a resource waste, and improve resource utilization. A lower channel encoding code rate indicates more redundant bits added after encoding, and a stronger anti-channel interference and fading capability. Because the second data does not support transmission error correction based on a meaning represented by data, an anti-interference and fading capability of transmitting the second data on a channel may be improved by using a low encoding code rate and a large quantity of redundant bits, to improve transmission reliability. The error-tolerant data and the non-error-tolerant data in the transport block are differentially encoded based on decoding performance corresponding to different data, so that resource utilization can be improved while a data transmission reliability requirement is met.

The network device may send first indication information and second indication information to the terminal, where the first indication information indicates that the encoding code rate of the first data is the first code rate, and the second indication information indicates that the encoding code rate of the second data is the second code rate. Correspondingly, the terminal receives the first indication information and the second indication information from the network device, and determines the encoding code rate of the first data and the encoding code rate of the second data based on the first indication information and the second indication information. Therefore, after receiving the first indication information and the second indication information, the terminal performs channel decoding by using the corresponding code rates.

Optionally, the network device may further send third indication information to the terminal, where the third indication information indicates the first data and/or the second data in the transport block. An indication manner in which the third indication information indicates the first data and/or the second data in the transport block may include but is not limited to the foregoing example 1 to example 4 of the indication manner of the fourth indication information. For details, refer to the foregoing descriptions. Details are not described herein again. Correspondingly, the terminal receives the third indication information from the network device, and determines a location of the first data and a location of the second data in the transport block based on the third indication information, so that the terminal decodes the encoded data to obtain the first data and the second data.

Optionally, the transport block further includes a CRC sequence corresponding to second data. Because the non-error-tolerant data does not support transmission error correction based on a meaning represented by data, if a transmission error that cannot be corrected by channel encoding occurs during transmission on a channel, the terminal cannot learn of actual content of the data. The CRC sequence may be used by the terminal to check whether the second data (namely, the non-error-tolerant data) is correctly transmitted.

For the first data in the transport block, because transmission error correction based on a meaning represented by data is supported, even if a part of transmission errors that cannot be corrected by channel encoding are generated during transmission on the channel, after performing channel decoding on the first data in the transport block at a physical layer, the terminal may transfer the first data to an upper layer (for example, an application layer), and the upper layer may restore the first data based on a meaning represented by a data bit that is correctly decoded in the data. Therefore, the transport block may not include a CRC sequence corresponding to the first data.

The following describes an example of a specific process in which the network device obtains the CRC sequence corresponding to the second data and separately encodes the first data and the second data by using different code rates to obtain the encoded data. The process may include but is not limited to the following implementations.

Implementation 1: The network device obtains third data based on the second data through a first protocol layer module, where the third data includes the second data and the CRC sequence corresponding to the second data. The transport block specifically includes the first data and the third data.

By way of an example but not a limitation, the first protocol layer module may be a MAC layer module or an RLC layer module.

A manner in which the network device adds the CRC sequence to the second data based on the second data through the first protocol layer module includes but is not limited to the following manners:
Manner 1: The first protocol layer module of the network device obtains at least one data unit, and each data unit includes a signaling field and a data field. The network device may determine, through the first protocol layer module, that a data field of a first data unit in the at least one data unit belongs to the first data, that is, data included in the data field of the first data unit is error-tolerant data. The second data includes a first part and a second part, the first part includes a data unit other than the first data unit in the at least one data unit, and the second part includes a signaling field of the first data unit. The network device obtains a first CRC sequence through the first protocol layer module based on the first part, and the network device obtains, through the first protocol layer module based on a signaling field of each first data unit in the second part, a CRC sequence corresponding to the signaling field of each first data unit. The CRC sequence corresponding to the second data includes the first CRC sequence and the CRC sequence corresponding to the signaling field of each first data unit. If the at least one data unit includes N first data units, the CRC sequence corresponding to the second data includes (1+N) CRC sequences, namely, the first CRC sequence and N CRC sequences corresponding to signaling fields of the N first data units.

For example, the first protocol layer module is a MAC layer module. As shown in FIG. 6, the MAC layer module of the network device obtains a MAC SDU 0 from the non-error-tolerant DRB, and obtains a MAC SDU 1 and a MAC SDU 2 from the error-tolerant DRB. The MAC SDU may be referred to as a MAC subPDU (subPDU), that is, the MAC SDU is a MAC subPDU forming a MAC PDU.

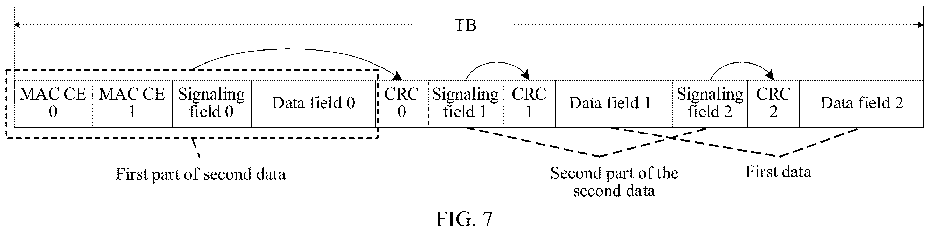

The MAC SDU 0 from the non-error-tolerant DRB belongs to the non-error-tolerant data (that is, belongs to the second data). The MAC SDU 1 and the MAC SDU 2 from the error-tolerant DRB are both first data units. Signaling fields in the MAC SDU 1 and the MAC SDU 2 carry control signaling, for example, control signaling including a plurality of protocol layers, and belong to the non-error-tolerant data (that is, belong to the second data). Data fields in the MAC SDU 1 and the MAC SDU 2 belong to the error-tolerant data (that is, belong to the first data). In addition, the MAC layer module may further generate MAC layer control signaling to be sent to the terminal, namely, a MAC control element (control element, CE), for example, a MAC CE 0 and a MAC CE 1 shown in FIG. 6. The MAC CE also belongs to the non-error-tolerant data. If the CRC sequence is added based on the second data in Manner 1, FIG. 7 shows a TB generated by the MAC module. The second data includes a first part and a second part, and the first part of the second data includes a MAC CE 0, a MAC CE 1, and a MAC SDU 0. The MAC layer module obtains, based on the first part, a CRC sequence corresponding to the first part, namely, CRC 0 shown in FIG. 7. Specifically, the MAC layer module may concatenate the MAC SDU obtained from the non-error-tolerant DRB, namely, the MAC SDU 0, with the MAC CE 0 and the MAC CE 1 generated by the MAC module, to obtain the first part of the second data. The first part of the first data and the CRC sequence corresponding to the first part may be located on the left side of the TB shown in FIG. 7. The second part of the second data includes a signaling field in the MAC SDU from the error-tolerant DRB, namely, a signaling field 1 in the MAC SDU 1 and a signaling field 2 in the MAC SDU 2. The MAC layer module determines, based on each signaling field, a CRC sequence corresponding to each signaling field. For example, the MAC layer module determines, based on the signaling field 1, a CRC sequence corresponding to the signaling field 1, namely, CRC 1 shown in FIG. 7; and the MAC layer module determines, based on the signaling field 2, a CRC sequence corresponding to the signaling field 2, namely, CRC 2 shown in FIG. 7. After obtaining the CRC sequence corresponding to the signaling field, the MAC layer module concatenates the signaling field, the corresponding CRC sequence, and a data field of the MAC SDU to which the signaling field belongs. For example, after the signaling field 1, the CRC 1, and the data field 1 are concatenated, and the signaling field 2, the CRC 2, and the data field 2 are concatenated, the signaling field 1, the CRC 1, the data field 1, the signaling field 2, the CRC 2, and the data field 2 are located on the right side of the TB shown in FIG. 7. Therefore, the TB generated by the MAC layer module includes the first data and the third data, the first data includes the data field 1 and the data field 2, and the third data includes the second data and the CRC 0, the CRC 1, and the CRC 2.

Manner 2: The first protocol layer module of the network device obtains at least one data unit, and obtains the first data and the second data based on the at least one data unit. The first protocol layer module obtains, based on the second data, a second CRC sequence corresponding to the second data.

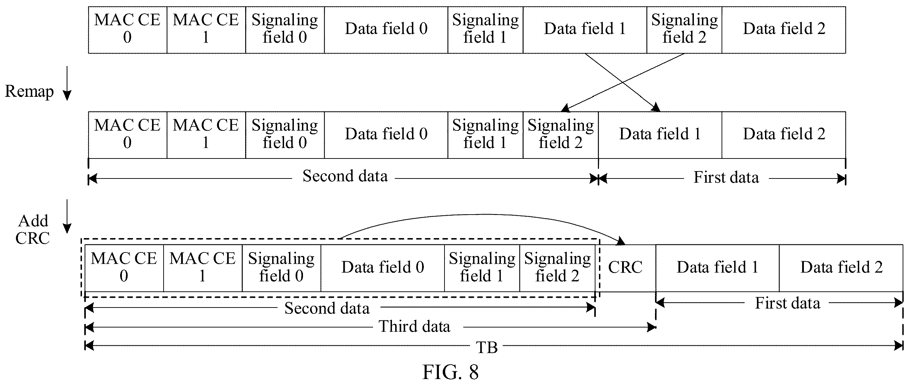

For example, the first protocol layer module is a MAC layer module. For example, at least one data unit obtained by the MAC layer module of the network device and a MAC CE generated by the MAC layer module are shown in FIG. 6. The MAC layer module may include a remapping unit. The remapping unit may perform remapping based on the at least one data unit and the MAC CE, to obtain the non-error-tolerant data part (namely, the second data) and the error-tolerant data part (namely, the first data). As shown in FIG. 8, the MAC layer module performs remapping, concatenates a MAC CE 0, a MAC CE 1, a MAC SDU 0 (including a signaling field 0 and a data field 0) from the non-error-tolerant DRB, and a signaling field 1 and a signaling field 2 in a MAC SDU from the error-tolerant DRB, to obtain the second data, and concatenates a data field 1 and a data field 2, to obtain the first data. The MAC layer module obtains, based on the second data, the CRC sequence corresponding to the second data, namely, CRC shown in FIG. 8. A TB generated by the MAC layer module includes the first data and the third data, and the third data includes the second data and the CRC corresponding to the second data.

The foregoing describes two manners in which the network device adds the CRC sequence to the second data through the first protocol layer module. In Implementation 1, a manner in which the network device performs channel encoding on the first data and the second data includes but is not limited to the following manner A and manner B.

Manner A: The network device performs channel encoding on the third data through the first protocol layer module by using a third code rate, to obtain fourth data, where the transport block specifically includes the first data and the fourth data. The fourth data includes the third data and redundant data obtained by performing channel encoding on the third data. The network device obtains the transport block from the first protocol layer module through a second protocol layer module, and performs channel encoding on the transport block through the second protocol layer module by using the first code rate, to obtain the encoded data. After the encoding is performed by the first protocol layer module and the second protocol layer module, the encoding code rate of the second data in the encoded data is the second code rate, and the second code rate is obtained based on the first code rate and the third code rate.

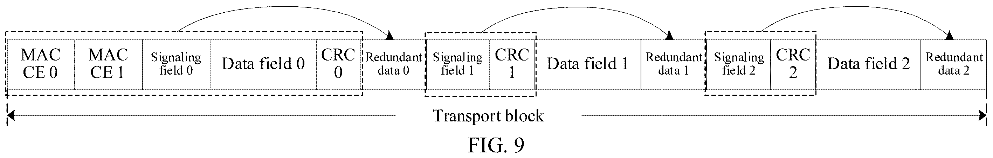

For example, the MAC layer module of the network device adds the CRC sequence to the second data in the foregoing manner 1, to obtain the third data and the first data, as shown in FIG. 7. The MAC layer module of the network device may perform, by using the third code rate, channel encoding on the first part of the second data and the CRC 0 corresponding to the first part, to obtain encoded data. As shown in FIG. 9, the encoded data includes the first part, the CRC 0 corresponding to the first part, and redundant data 0 obtained through encoding. The MAC layer module may perform, by using the third code rate, channel encoding on the signaling field 1 and the CRC 1 corresponding to the signaling field 1 to obtain encoded data, and the encoded data includes the signaling field 1, the CRC 1 corresponding to the signaling field 1, and redundant data 1 obtained through encoding. In addition, the MAC layer module may perform, by using the third code rate, channel encoding on the signaling field 2 and the CRC 2 corresponding to the signaling field 2 to obtain encoded data, and the encoded data includes the signaling field 2, the CRC 2 corresponding to the signaling field 2, and redundant data 2 obtained through encoding. The fourth data obtained, through encoding, by the network device through the MAC layer module by using the third code rate includes the third data and the redundant data 0, the redundant data 1, and the redundant data 2 that are obtained through channel encoding. The fourth data and the first data form a transport block, and the transport block is transferred by the MAC layer module to a PHY layer module (that is, the PHY layer module is an example of the second protocol layer module). The PHY layer module encodes the transport block by using the first code rate, to obtain the encoded data.

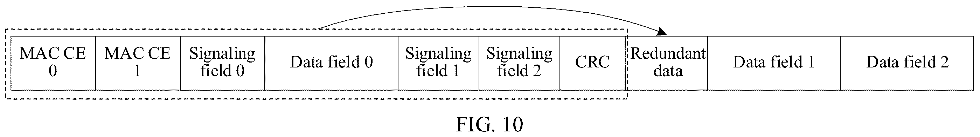

For another example, the MAC layer module of the network device adds the CRC sequence to the second data in the foregoing manner 2, to obtain the third data and the first data, as shown in FIG. 8. The MAC layer module of the network device may perform channel encoding on the third data by using the third code rate, to obtain encoded data. As shown in FIG. 10, the encoded data includes redundant data shown in FIG. 10. The fourth data includes the third data and the redundant data obtained through channel encoding. The fourth data and the first data form a transport block, and the transport block is transferred by the MAC layer module to a PHY layer module. The PHY layer module encodes the transport block by using the first code rate, to obtain the encoded data.

In the foregoing two examples, the second data in the encoded data is encoded twice in total. The second data is encoded once through the MAC layer module by using the third code rate, and is encoded again through the PHY layer module by using the first code rate. A final code rate of the second data in the encoded data is the second code rate, and the second code rate is obtained based on the first code rate and the third code rate. However, the first data in the encoded data is encoded only once, and a code rate of the first data in the encoded data is the first code rate.

The network device may determine the encoding code rate of the first data and the encoding code rate of the second data by referring to a channel quality indicator (channel quality indicator, CQI) index fed back by the terminal. The terminal may feed back, to the network device based on a downlink channel measurement result, a CQI index in a CQI index set shown in Table 2, to notify the network device of modulation and encoding parameters recommended by the terminal. For example, if the CQI index fed back by the terminal to the network device is 4, it indicates that a modulation scheme recommended by the terminal to the network device is quadrature phase shift keying (quadrature phase shift keying, QPSK), a channel encoding code rate is 308/1024, and encoding efficiency is 0.6016. The network device may determine a modulation and encoding scheme based on the CQI fed back by the terminal. Because the error-tolerant data not only can correct a transmission error through channel encoding, but also can correct, at the terminal, a transmission error based on a meaning represented by data, a code rate used by the first data determined by the network device may be higher than a code rate recommended by the terminal, to reduce a resource waste. For example, the network device may determine that a channel encoding code rate (namely, the first code rate) of the first data is 602/1024 based on performance of transmission error correction of the first data based on the meaning represented by the data. If the network device determines that a channel encoding code rate, namely, the second code rate, recommended by the terminal and used by the second data is 308/1024, and if the first code rate of channel encoding performed through the PHY layer module is 602/1024, the network device may determine that a code rate (namely, the third code rate) of channel encoding performed through the MAC layer module on the third data is 308/602, that is, the second code rate is a product of the third code rate and the first code rate. However, this application is not limited thereto.

**Table 2**

| CQI index | Modulation scheme | code rate (×1024) | Encoding efficiency |
|---|---|---|---|
| 0 | - | | |
| 1 | QPSK | 78 | 0.1523 |
| 2 | QPSK | 120 | 0.2344 |
| 3 | QPSK | 193 | 0.3770 |
| 4 | QPSK | 308 | 0.6016 |
| 5 | QPSK | 449 | 0.8770 |
| ... | | | |

It should be understood that a location of the CRC sequence and a location of the redundant data in FIG. 7 to FIG. 10 are merely examples. The location of the CRC sequence and the location of the redundant data in specific implementation are not limited in this application. In FIG. 10, the CRC corresponding to the second data and the redundant data are located after the second data. Based on a specific implementation requirement, the CRC and/or the redundant data may be located before the second data or after the first data. This is not limited in this application. Specifically, the location of the CRC sequence and the location of the redundant data may be protocol-predefined or may be obtained by exchanging information between the network device and the terminal, so that the network device and the terminal can reach a consensus on the location of the CRC sequence and the location of the redundant data.

Manner B: The network device obtains fifth indication information and the transport block from the first protocol layer module through a second protocol layer module, where the fifth indication information indicates the first data and/or the third data in the transport block. The second protocol layer module of the network device performs channel encoding on the first data in the transport block by using the first code rate based on the fifth indication information, and encodes the third data by using the second code rate, to obtain the encoded data.

An indication manner in which the fifth indication information indicates the first data and/or the third data in the transport block may include but is not limited to the foregoing example 1 to example 4 of the indication manner in which the fourth indication information indicates the first data and/or the second data. For details, refer to the foregoing descriptions. Details are not described herein again. After obtaining the transport block from the first protocol layer module, the second protocol layer module may determine a location of the first data and a location of the third data in the transport block, to encode the first data by using the first code rate, and encode the third data by using the second code rate, to obtain the encoded data. The encoded data includes sixth data and seventh data. The sixth data includes the first data and encoded redundant data corresponding to the first data. The seventh data includes the second data and encoded redundant data corresponding to the second data.

For example, the second protocol layer module is a PHY layer module. In Manner B, the PHY layer module may redefine a code block segmentation rule, and the PHY layer module separately segments the error-tolerant data (namely, the first data) and the non-error-tolerant data (the third data) in the transport block into different code blocks based on the fifth indication information, encodes the code blocks of the error-tolerant data by using the first code rate, and encodes the code blocks of the non-error-tolerant data by using the second code rate, instead of using a current manner of determining, based on a data amount of the transport block, whether to divide the transport block into a plurality of code blocks, and evenly allocating the code blocks based on the data amount when the transport block is divided into the plurality of code blocks.

For example, first 970 bits in the transport block are the non-error-tolerant data, remaining 2030 bits are the error-tolerant data, and a total length of the transport block is 3000 bits. In a manner, when performing code block segmentation, the PHY layer may segment the transport block into two code blocks strictly based on a length of the error-tolerant data and a length of the non-error-tolerant data. One code block includes 970 bits of the non-error-tolerant data, and the other code block includes 2030 bits of the error-tolerant data. The PHY layer separately encodes the code blocks by using corresponding code rates. In another manner, the PHY layer may place some bits of the error-tolerant data in a code block to which the non-error-tolerant data belongs. For example, a ratio of a quantity of bits of the non-error-tolerant data to a quantity of bits of the error-tolerant data is 97:203, and a ceiling operation may be performed to obtain 1:2. A length of one code block is 1000 bits, including all 970 bits of the non-error-tolerant data and 30 bits of the error-tolerant data. Because the error-tolerant data has a higher error correction capability on a terminal side, transmission performance of the error-tolerant data is not affected when the error-tolerant data is transmitted by using a lower code rate that is the same as the non-tolerant data. In this manner, implementation complexity of the network device can be reduced.

The foregoing describes Implementation 1 in which the network device adds the CRC sequence to the second data through the first protocol layer module, and Manner A and Manner B, in which the network device performs channel encoding on the first data and the second data, that are provided in Implementation 1. The following describes Implementation 2 provided in this application.

Implementation 2: The network device obtains sixth indication information and the transport block from the first protocol layer module through a second protocol layer module, where the transport block includes the first data and the second data, and the sixth indication information indicates the first data and/or the second data in the transport block. The network device obtains third data based on the second data through the second protocol layer module, where the third data includes the second data and the CRC sequence corresponding to the second data; and then performs channel encoding on the first data through the second protocol layer module by using the first code rate and performs channel encoding on the third data by using the second code rate, to obtain the encoded data.

An indication manner in which the sixth indication information indicates the first data and/or the second data in the transport block may include but is not limited to the foregoing example 1 to example 4 of the indication manner in which the fourth indication information indicates the first data and/or the second data. For details, refer to the foregoing descriptions. Details are not described herein again.

For example, the first protocol layer module is a MAC layer module, and the second protocol layer module is a PHY layer module. In one manner, after the MAC layer module of the network device obtains a MAC SDU 0 from a non-error-tolerant DRB, and obtains a MAC SDU 1 and a MAC SDU 2 from an error-tolerant DRB, the MAC layer module may generate the transport block. Specifically, the MAC layer module concatenates a MAC CE 0 and a MAC CE 1 generated by the MAC layer module and the MAC SDU 0 (that is, used as a MAC subPDU) obtained from the non-error-tolerant DRB, and then the MAC CE 0, the MAC CE 1, and the MAC SDU 0 are located on the left side of a TB. Refer to FIG. 6. The MAC SDU 1 and the MAC SDU 2 obtained from the error-tolerant DRB are used as MAC subPDUs, and corresponding error-tolerant bit parts are concatenated and then located on the right side of the TB. In another manner, after obtaining a MAC SDU 0 from a non-error-tolerant DRB, and obtaining a MAC SDU 1 and a MAC SDU 2 from an error-tolerant DRB, the MAC layer module of the network device performs remapping through a described remapping unit, to obtain the remapped second data and the remapped first data shown in FIG. 8, and concatenates the second data and the first data to obtain the transport block.

The MAC layer module transfers, to the PHY layer module, the transport block including the first data and the second data, and provides the sixth indication information to the PHY layer module, to notify the PHY layer module of the location of the first data and/or the location of the second data in the transport block. The PHY layer module separately obtains the first data and the second data from the transport block based on the sixth indication information. The PHY layer module may perform code block division based on the error-tolerant data and the non-error-tolerant data. For example, the PHY layer module divides the transport block into two code blocks. One code block includes the second data. As described above, the code block does not include bits in the first data, or the code block may also include some bits in the first data. The other code block includes only bits in the error-tolerant data. The network device adds, through the PHY layer module, a CRC sequence to the code block including the second data, to obtain the third data, encodes the third data by using the second code rate, and encodes the first data by using the first code rate, to obtain the encoded data.

Optionally, whether the network device adds the CRC sequence to the second data through the first protocol layer module or the second protocol layer module and whether to perform, through the first protocol layer module, channel encoding on the second data to which the CRC sequence is added may be predefined, or a consensus may be reached between the network device and the terminal in a manner of notifying the terminal by using signaling, so that the terminal performs decoding in a corresponding manner.

S503: The terminal decodes the encoded data, to obtain the first data and the second data in the transport block.

Optionally, the terminal may obtain the first indication information and the second indication information from the network device, to determine that the channel encoding code rate used for the first data in the encoded data is the first code rate, and the channel encoding code rate used for the second data in the encoded data is the second code rate. The terminal may decode the encoded data based on the first indication information and the second indication information.

Optionally, the terminal may further obtain, from the network device, the third indication information indicating the first data and/or the second data in the transport block. The terminal may obtain the first data and/or the second data in the transport block based on the third indication information.

In an implementation, the network device uses the channel encoding manner provided in Manner A in Implementation 1. To be specific, after the network device adds the CRC sequence to the second data through the first protocol layer module, the network device performs, through the first protocol layer module, channel encoding on the data (namely, the third data) to which a CRC sequence is added, to obtain the fourth data. The network device performs, through the second protocol layer module by using the first bit rate, channel encoding on the transport block that includes the fourth data and the first data and that is obtained from the first protocol layer module, to obtain the encoded data.

The terminal may determine the third code rate based on the first code rate and the second code rate. Alternatively, the network device does not send the second indication information to the terminal, but sends, to the terminal, indication information indicating the third code rate, and the terminal may determine the third code rate based on the indication information.

After receiving the encoded data, the terminal decodes the encoded data through the second protocol layer module by using the first code rate, to obtain the transport block, where the transport block specifically includes the first data and the fourth data. After obtaining the transport block, the second protocol layer module of the terminal transfers the transport block to the first protocol layer module. The second protocol layer module of the terminal may obtain the first data and the fourth data in the transport block based on the third indication information. If the third indication information indicates the first data, the second protocol layer module of the terminal may obtain, based on the third indication information, the first data in the transport block, and data other than the first data in the transport block is the fourth data. If the third indication information indicates the second data, the second protocol layer module may determine the fourth data in the transport block with reference to the third code rate and the second data indicated by the third indication information. Specifically, the second protocol layer module may determine a length of the second data based on the third indication information, and may obtain a length of the fourth data based on the length of the second data and the third code rate. For example, if the length of the second data is L, and the third code rate is R, the second protocol layer module may obtain that the length of the fourth data is L/R, in other words, the fourth data includes the second data whose length is L and redundant data whose length is L/R-L. If the terminal and the network device reach a consensus that the redundant data is located before the second data (or after the second data), the second protocol layer module of the terminal may determine, based on the second data, that the fourth data includes the second data and the redundant data whose length is L/R-L before the second data (or after the second data). The terminal may determine that data other than the fourth data in the transport block is the first data. However, this application is not limited thereto. The third indication information may further indicate the first data and the second data, and the second protocol layer module may determine the first data and the fourth data in the transport block based on the third indication information.

In another implementation, the network device may not send the third indication information to the terminal, the network device may send, to the terminal, indication information indicating the fourth data, or the first data and the fourth data in the transport block, and the terminal may determine the first data and the fourth data in the transport block based on the indication information.

The terminal decodes the fourth data through the first protocol layer module by using the third code rate, to obtain the third data, and may check, based on the CRC sequence that corresponds to the second data and that is included in the third data, whether the second data in the third data is correctly transmitted.

If the network device adds the CRC sequence to the second data in the foregoing manner 1, the terminal may determine, based on the first CRC sequence, whether the first part is correctly transmitted, and determine, based on each CRC sequence in the second part, whether a corresponding signaling field is correctly transmitted. If it is determined, based on the CRC sequence, that the second data is correctly transmitted, the second protocol layer module may transfer the first data and the second data to an upper layer, for example, transfer the first data and the second data to an application layer module through each protocol layer module. If it is determined, based on the CRC sequence, that a transmission error occurs in the second data, the terminal may send NACK information to the network device, to notify the network device of a part that is not correctly transmitted in the second data, and the network device may retransmit, to the terminal, the part that is not correctly transmitted in the second data. The terminal may transfer the first data to an upper layer through the second protocol layer module, so that an application layer can determine, based on the meaning represented by the first data, whether the transmission is correct, and correct a transmission error by using a meaning represented by data when the transmission is not correct.

If the network device adds the CRC sequence to the second data in the foregoing manner 2, the terminal may determine, based on the second CRC sequence, whether the second data is correctly transmitted. If the second data is correctly transmitted, the second protocol layer module may transfer the first data and the second data to an upper layer, for example, transfer the first data and the second data to an application layer module through each protocol layer module. If the second data is incorrectly transmitted, the terminal may send NACK information to the network device, to notify the network device that the second data is not correctly transmitted, and the network device may retransmit the second data to the terminal. The terminal may transfer the first data to an upper layer through the second protocol layer module, so that an application layer may determine, based on the meaning represented by the first data, whether the transmission is correct.

In another implementation, the network device uses the channel encoding manner provided in Manner B in Implementation 1. To be specific, after adding the CRC sequence to the second data through the first protocol layer module, the network device obtains, through the second protocol layer module, the transport block including the third data and the first data from the first protocol layer module and obtains the fifth indication information. After obtaining the third data and the first data based on the fifth indication information, the second protocol layer module encodes the first data by using the first code rate, to obtain the sixth data, and encodes the second data by using the second code rate, to obtain the seventh data. The encoded data includes the sixth data and the seventh data.

The terminal may obtain the third indication information from the network device, and determine the location of the first data and the location of the third data in the transport block based on the first data and/or the second data that are/is indicated by the third indication information. If the third indication information indicates the second data, the terminal may determine the length or the proportion of the third data with reference to the second code rate and the length or the proportion of the second data, and determine the third data in the transport block. Alternatively, the terminal may obtain, from the network device, the fifth indication information indicating the first data and/or the third data in the transport block, to obtain the location of the first data and the location of the third data in the transport block. After obtaining the location of the first data and the location of the third data in the transport block, the terminal may determine the sixth data and the seventh data in the encoded data based on the encoding code rates. The sixth data includes the first data and encoded redundant data corresponding to the first data, and the seventh data includes the second data and encoded redundant data corresponding to the second data. Alternatively, the terminal may obtain, from the network device, indication information indicating the sixth data and/or the seventh data in the encoded data, so that the terminal can determine the sixth data and the seventh data in the encoded data.

After the terminal determines the sixth data and the seventh data in the encoded data, the terminal decodes the sixth data through the second protocol layer module by using the first code rate, to obtain the first data, and decodes the seventh data by using the second code rate, to obtain the third data. The second protocol layer module transfers the first data and the third data to the first protocol layer module, and the first protocol layer module may check, based on the CRC sequence that corresponds to the second data and that is included in the third data, whether the second data in the third data is correctly transmitted. For details, refer to descriptions in Manner A. Details are not described herein again. The first protocol layer module may transfer the first data to the upper layer. If the second data is correctly transmitted, the first protocol layer module further transmits the second data to the upper layer.

In still another implementation, the network device uses the channel encoding manner provided in Implementation 2. To be specific, the network device obtains, from the first protocol layer module through the second protocol layer module, the sixth indication information and the transport block including the first data and the second data. After adding the CRC sequence to the second data through the second protocol layer module, to obtain the third data, the network device performs channel encoding on the first data by using the first code rate and performs channel encoding on the second data by using the second code rate, to obtain the encoded data.

Refer to Manner B. The terminal may determine the sixth data and the seventh data in the encoded data, the terminal decodes the sixth data through the second protocol layer module by using the first code rate, to obtain the first data, and decodes the seventh data by using the second code rate, to obtain the third data. A difference from Manner B is that the second protocol layer module checks, based on the CRC sequence corresponding to the second data included in the third data, whether the second data in the third data is correctly transmitted. The second protocol layer module may transfer the first data to the first protocol layer module. If the second data is correctly transmitted, the second protocol layer module may further transfer the second data to the first protocol layer module. If the transmission fails, the terminal may send NACK information to the network device.

According to the foregoing solution, compared with the non-error-tolerant data, the error-tolerant data has a stronger capability of overcoming impact of channel interference, fading, and the like. Therefore, the transmit end performs differentiated encoding on the error-tolerant data and the non-error-tolerant data in the transport block, and transmits the transport block encoded by using different code rates, so that in a case of ensuring transmission reliability, a resource waste can be reduced, and transmission efficiency of the transport block can be improved.

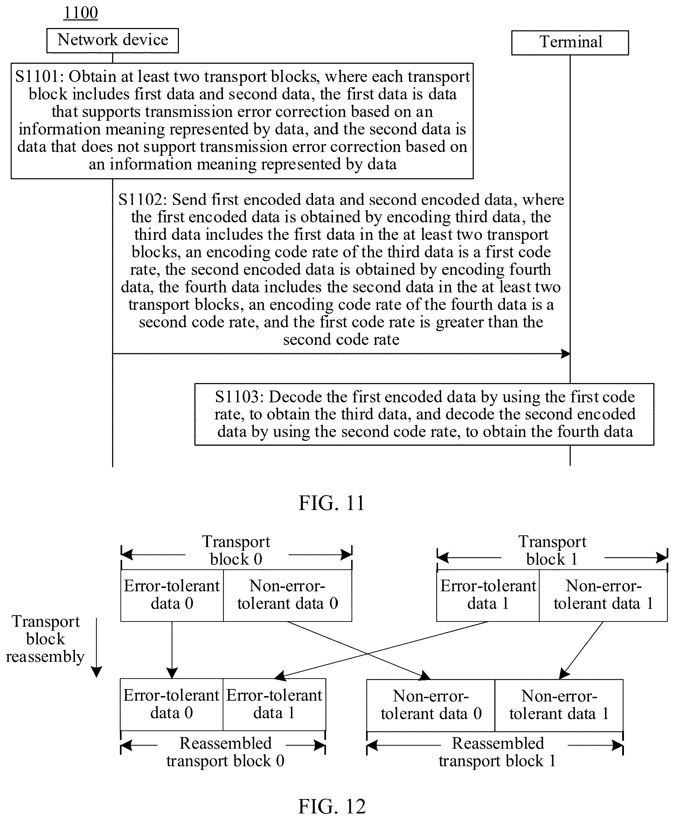

Embodiments of this application provide another solution. In this solution, when the transport block transferred by the first protocol layer module to the second protocol layer module includes the error-tolerant data and the non-error-tolerant data, the second protocol layer module may separately reassemble the error-tolerant data and the non-error-tolerant data in at least two transport blocks, and then separately process the reassembled error-tolerant data and the reassembled non-error-tolerant data. The following is described with reference to FIG. 11.

FIG. 11 is a schematic flowchart of a data transmission method 1100 according to an embodiment of this application. The method includes but is not limited to the following steps.

S1101: A network device obtains at least two transport blocks, where the at least two transport blocks include a first transport block, the first transport block includes first data and second data, the first data is data that supports transmission error correction based on an information meaning represented by data, and the second data is data that does not support transmission error correction based on an information meaning represented by data.

For example, a second protocol layer module of the network device may obtain the at least two transport blocks from a first protocol layer module, and the at least two transport blocks include the first transport block. For example, each of the at least two transport blocks is a first transport block, that is, each transport block includes error-tolerant data and non-error-tolerant data. Alternatively, in addition to the first transport block, the at least two transport blocks further include a second transport block including only the first data (namely, error-tolerant data) and/or a third transport block including only the second data (namely, non-error-tolerant data).

When the first protocol layer module transfers each transport block to the second protocol layer module, indication information corresponding to each transport block is further carried. The indication information indicates that the transport block includes error-tolerant data and/or non-error-tolerant data. If the transport block includes the error-tolerant data and the non-error-tolerant data, the indication information further indicates a location of the error-tolerant data and a location of the non-error-tolerant data in the transport block, so that the second protocol layer module can determine, based on the indication information corresponding to each transport block, a type (for example, an error-tolerant type or a non-error-tolerant type) of data included in the transport block; and when the transport block includes both the error-tolerant data and the non-error-tolerant data, the second protocol layer module determines the location of the error-tolerant data and the location of the non-error-tolerant data in the transport block based on the indication information.

By way of an example but not a limitation, the first protocol layer module may be a MAC layer module or an RLC module, and the second protocol layer module may be a PHY module.

S1102: The network device sends first encoded data and second encoded data to a terminal, where the first encoded data is obtained by encoding third data, the third data includes the first data in the at least two transport blocks, a code rate of the third data is a first code rate, the second encoded data is obtained by encoding fourth data, the fourth data includes the second data in the at least two transport blocks, a code rate of the fourth data is a second code rate, and the first code rate is greater than the second code rate.

Correspondingly, the terminal receives the first encoded data and the second encoded data from the network device.

The network device may reassemble the obtained at least two transport blocks. For example, the network device obtains the error-tolerant data (namely, the first data) in the at least two transport blocks and combines the error-tolerant data to obtain a reassembled transport block. The reassembled transport block may be referred to as an error-tolerant transport block. The network device obtains the non-error-tolerant data in the at least two transport blocks and combines the non-error-tolerant data to obtain another reassembled transport block. The reassembled transport block may be referred to as a non-error-tolerant transport block.

The error-tolerant transport block is the third data, and the network device may encode the third data by using the first code rate, to obtain the first encoded data. The network device may obtain the fourth data based on the non-error-tolerant transport block, where the fourth data includes the non-error-tolerant transport block and a CRC sequence corresponding to the non-error-tolerant transport block. The network device encodes the fourth data by using the second code rate, to obtain the second encoded data. The network device may send first indication information and second indication information to the terminal, where the first indication information indicates that the code rate of the third data is the first code rate, and the second indication information indicates that the code rate of the fourth data is the second code rate.

For example, the first protocol layer module is a MAC layer module, and the second protocol layer module is a PHY layer module. As shown in FIG. 12, the network device obtains a transport block 0 and a transport block 1 from the MAC layer module through the PHY layer module. The PHY layer module may determine, based on indication information corresponding to each transport block, that both the transport block 0 and the transport block 1 include error-tolerant data and non-error-tolerant data, that is, the transport block 0 and the transport block 1 each are an example of the first transport block. The PHY layer module may obtain the error-tolerant data in the transport block 0 and the error-tolerant data in the transport block 1 based on the indication information to form a reassembled transport block 0. The reassembled transport block 0 may be referred to as an error-tolerant transport block. The PHY layer module obtains the non-error-tolerant data in the transport block 0 and the non-error-tolerant data in the transport block 1 to form a reassembled transport block 1. The reassembled transport block 1 may be referred to as a non-error-tolerant transport block. The PHY layer module encodes the reassembled transport block 0 (namely, the third data) by using the first code rate, to obtain the first encoded data. The PHY layer module obtains the fourth data based on the reassembled transport block 1, where the fourth data includes the recombined transport block 1 and a CRC sequence corresponding to the recombined transport block 1; and then the PHY layer module encodes the fourth data by using the second code rate, to obtain the second encoded data.

For another example, the network device obtains the first transport block, the second transport block, and the third transport block from the MAC layer module through the PHY layer module. As described above, the first transport block includes the error-tolerant data and the non-error-tolerant data, the second transport block includes only the error-tolerant data, and the third transport block includes only the non-error-tolerant data. The PHY layer module may obtain the error-tolerant data in the first transport block and combine the error-tolerant data with the second transport block, to obtain a reassembled transport block 0 (namely, the third data), and encoded the reassembled transport block 0 by using the first code rate, to obtain the first encoded data. In addition, the PHY layer module obtains the non-error-tolerant data in the first transport block and combines the non-error-tolerant data with the third transport block to obtain the reassembled transport block 1, and obtains, based on the reassembled transport block 1, a CRC sequence corresponding to the reassembled transport block 1, to obtain the fourth data including the reassembled transport block 1 and the CRC sequence corresponding to the reassembled transport block 1; and then the PHY layer module encodes the fourth data by using the second code rate, to obtain the second encoded data.

That the network device sends the first encoded data and the second encoded data to the terminal includes: The network device sends the first encoded data to the terminal on a first resource, and sends the second encoded data to the terminal on a second resource. An offset between the first resource and the second resource is a first offset. The first offset is predefined, or the network device may notify the terminal of the first offset by using indication information.

For example, the network device may send, to the terminal, the indication information indicating the first resource or the second resource, and the terminal may determine the first resource and the second resource based on the predefined first offset. Alternatively, the network device may send, to the terminal, the indication information indicating the first resource (or the second resource) and the first offset, and the terminal determines the first resource and the second resource based on the indication information.

S1103: The terminal decodes the first encoded data by using the first code rate, to obtain the third data, and decodes the second encoded data by using the second code rate, to obtain the fourth data.

The terminal may transfer the third data to an upper layer after performing decoding through the PHY layer module, for example, transfer the third data to an application layer. The application layer determines, based on a meaning represented by the third data, whether the transmission is correct. If the transmission is not correct, a transmission error is corrected by using the meaning represented by the data.

After obtaining the fourth data through the PHY layer module, the terminal may check, based on the CRC sequence included in the fourth data, whether the non-error-tolerant data in the fourth data is correctly transmitted. If the transmission is correct, the PHY layer module may transfer the non-error-tolerant data to the upper layer. If the transmission is not correct, the terminal may send NACK information to the network device, and the network device may retransmit the fourth data to the terminal based on the NACK information.

According to the foregoing solution, the at least two transport blocks that include the error-tolerant data and the error-tolerant data are reassembled, to obtain the error-tolerant transport block and the non-error-tolerant transport block, and differentiated processing is performed on the error-tolerant transport block and the non-error-tolerant transport block, so that in a case of ensuring transmission reliability, a resource waste can be reduced, and transmission efficiency of the transport block can be improved.

It may be understood that to implement functions in the foregoing embodiments, the base station and the terminal include corresponding hardware structures and/or software modules for performing various functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

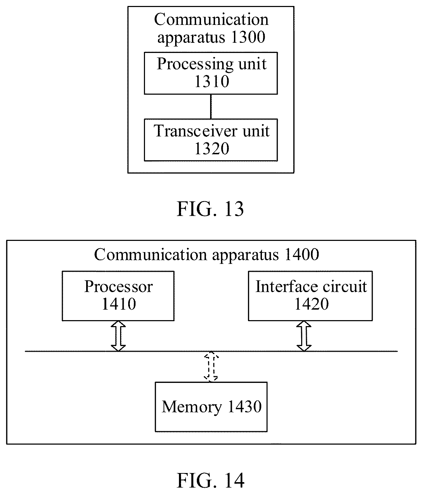

FIG. 13 and FIG. 14 are diagrams of structures of possible communication apparatuses according to embodiments of this application. These communication apparatuses may be configured to implement functions of the terminal or the network device in the foregoing method embodiments, and therefore can also implement beneficial effect of the foregoing method embodiments. In embodiments of this application, when the communication apparatus is configured to implement the functions of the terminal in the foregoing method embodiments, the communication apparatus may be one of the terminals 120a to 120j shown in FIG. 1. When the communication apparatus is configured to implement the functions of the network device in the foregoing method embodiments, the communication apparatus may be the RAN node 110a or 110b shown in FIG. 1, or may be a module (for example, a chip or a chip system) used in the terminal or the network device.

The communication apparatus 1300 includes a transceiver unit 1320, and the transceiver unit 1320 may be configured to receive or send information. The communication apparatus 1300 may further include a processing unit 1310, and the processing unit 1310 may be configured to process instructions or data, to implement a corresponding operation.

It should be understood that when the communication apparatus 1300 is a chip configured (or used) in a communication device, the transceiver unit 1320 in the communication apparatus 1300 may be an input/output interface or a circuit of the chip, and the processing unit 1310 in the communication apparatus 1300 may be a processor in the chip.

Optionally, the communication apparatus 1300 may further include a storage unit. The storage unit may be configured to store instructions or data. The processing unit 1310 may execute the instructions or the data stored in the storage unit, to enable the communication apparatus to implement a corresponding operation.

The communication apparatus 1300 may be configured to implement the functions of the terminal in the foregoing method embodiments. When the communication apparatus 1300 is configured to implement the functions of the terminal in the foregoing method embodiments, the transceiver unit 1320 is configured to receive encoded data from a first communication apparatus, where the encoded data is obtained by encoding a transport block, the transport block includes first data and second data, the first data supports transmission error correction based on an information meaning represented by data, the second data does not support transmission error correction based on an information meaning represented by data, a code rate of the first data is a first code rate, a code rate of the second data is a second code rate, and the first code rate is greater than the second code rate; and the processing unit 1310 is configured to decode the encoded data, to obtain the first data and the second data in the transport block.

The communication apparatus 1300 may be configured to implement the functions of the network device in the foregoing method embodiments. When the communication apparatus 1300 is configured to implement the functions of the network device in the foregoing method embodiments, the processing unit 1310 is configured to obtain first data and second data, where the first data supports transmission error correction based on a meaning represented by data, and the second data does not support transmission error correction based on a meaning represented by data; and the transceiver unit 1320 is configured to send encoded data to a second communication apparatus, where the encoded data is obtained by encoding a transport block, the transport block includes the first data and the second data, a code rate of the first data is a first code rate, a code rate of the second data is a second code rate, and the first code rate is greater than the second code rate.

For more detailed descriptions of the processing unit 1310 and the transceiver unit 1320, refer to related descriptions in the foregoing method embodiments.

It should be understood that the transceiver unit 1320 in the communication apparatus 1300 may be implemented through a transceiver, a transceiver circuit, an input/output interface, or a pin. When the transceiver unit 1320 is a transceiver, the transceiver may include a receiver and/or a transmitter. The processing unit 1310 in the communication apparatus 1300 may be implemented through at least one processor, or the processing unit 1310 in the communication apparatus 1300 may be implemented through at least one logic circuit. Optionally, the communication apparatus 1300 further includes the storage unit, and the storage unit may be implemented through a memory.

As shown in FIG. 14, the communication apparatus 1400 includes a processor 1410 and an interface circuit 1420. The processor 1410 and the interface circuit 1420 are coupled to each other. It may be understood that the interface circuit 1420 may be a transceiver or an input/output interface. Optionally, the communication apparatus 1400 may further include a memory 1430, configured to: store instructions to be executed by the processor 1410, store input data required for running instructions by the processor 1410, or store data generated after the processor 1410 runs the instructions.

In an implementation, the memory 1430 may alternatively be integrated into the processor 1410, or may be independent of the processor 1410.

When the communication apparatus 1400 is configured to implement the method provided in the foregoing method embodiments, the processor 1410 is configured to implement the functions of the processing unit 1310, and the interface circuit 1420 is configured to implement the functions of the transceiver unit 1320.

When the communication apparatus is a chip used in a terminal, the chip may implement functions related to the terminal in the foregoing method embodiments. The chip receives information/data from another module (for example, a radio frequency module or an antenna) in the terminal, where the information/data may be sent by a network device to the terminal; or the chip sends information/data to another module (for example, a radio frequency module or an antenna) in the terminal, where the information/data may be sent by the terminal device to a network device.

When the communication apparatus is a module used in a network device, the module may implement functions related to the network device in the foregoing method embodiments. The module receives information/data from another module (for example, a radio frequency module or an antenna) in the network device, where the information/data may be sent by a terminal to the network device; or the module sends information/data to another module (for example, a radio frequency module or an antenna) in the network device, where the information/data may be sent by the network device to a terminal. The network device module herein may be a chip of the network device, or may be a DU or another module (for example, a CU or an RU). The DU may be an O-DU in an O-RAN architecture, the CU may be an O-CU in the O-RAN architecture, and the RU may be an O-RU in the O-RAN architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in an access network device or a terminal device. The processor and the storage medium may alternatively exist as discrete components in the access network device or the terminal device.

According to the method provided in embodiments of this application, an embodiment of this application further provides a computer program product. The computer program product includes computer program code. When the computer program code is executed by one or more processors, an apparatus including the processor is enabled to perform the method provided in the foregoing method embodiments.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, procedures or functions in embodiments of this application are all or partially executed. The computer may be a general-purpose computer, a dedicated computer, a computer network, a network device, user equipment, or another programmable apparatus.

According to the method provided in embodiments of this application, an embodiment of this application further provides a computer-readable storage medium. The computer-readable storage medium stores the foregoing computer program or instructions. When the computer programs or the instructions are run by one or more processors, an apparatus including the processor is enabled to perform the method provided in the foregoing method embodiments.

The computer program or the instructions may be stored in the computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

According to the method provided in embodiments of this application, an embodiment of this application further provides a communication system, including the foregoing one or more terminals. The system may further include the foregoing one or more network devices.

In several embodiments provided in this application, it should be understood that the disclosed system, apparatus, and method may be implemented in other manners. For example, the described apparatus is merely an example. For example, division into the units is merely logical function division, and may be other division during actual implementation. For example, a plurality of units or components may be combined or may be integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In various embodiments of this application, unless otherwise stated or if there is a logic conflict, terms and/or descriptions in different embodiments are consistent and may be mutually referenced, and technical features in different embodiments may be combined into a new embodiment based on an internal logical relationship thereof.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data transmission method, wherein the method is performed by a first communication apparatus, and comprises:
obtaining first data and second data, wherein the first data supports transmission error correction based on a meaning represented by data, and the second data does not support transmission error correction based on a meaning represented by data; and
sending encoded data to a second communication apparatus, wherein the encoded data is obtained by encoding a transport block, the transport block comprises the first data and the second data, a code rate of the first data is a first code rate, a code rate of the second data is a second code rate, and the first code rate is greater than the second code rate.

2. The method according to claim 1, wherein the method comprises:
sending first indication information and second indication information to the second communication apparatus, wherein the first indication information indicates the first code rate, and the second indication information indicates the second code rate.

3. The method according to claim 1 or 2, wherein the method further comprises:
send third indication information to the second communication apparatus, wherein the third indication information indicates the first data and/or the second data in the transport block.

4. The method according to claim 3, wherein
the third indication information specifically indicates a length of the first data and/or a length of the second data; or
the third indication information specifically indicates a first identifier in a plurality of identifiers, the plurality of identifiers correspond to a plurality of lengths, and a length corresponding to the first identifier is a length of the first data or a length of the second data; or
the third indication information specifically indicates a proportion of the first data in the transport block, and/or indicates a proportion of the second data in the transport block; or
the third indication information specifically indicates a second identifier in a plurality of identifiers, the plurality of identifiers correspond to a plurality of proportions, and a proportion corresponding to the second identifier is a proportion of the first data in the transport block or a proportion of the second data in the transport block.

5. The method according to any one of claims 1 to 4, wherein obtaining the first data and the second data comprises:
receiving one or more data packets from a third communication apparatus, wherein the one or more data packets comprise at least one first data packet, the first data packet comprises data that supports transmission error correction based on a meaning represented by data, the first data packet carries fourth indication information, and the fourth indication information indicates the data that supports transmission error correction based on a meaning represented by data and/or data that does not support transmission error correction based on a meaning represented by data in the first data packet; and
determining the first data and the second data based on the one or more data packets and the fourth indication information carried in the at least one first data packet, wherein the first data comprises data, in the one or more data packets, that supports transmission error correction based on a meaning represented by data, and the second data comprises data, in the one or more data packets, that does not support transmission error correction based on a meaning represented by data.

6. The method according to any one of claims 1 to 5, wherein
obtaining third data based on the second data through a first protocol layer module, wherein the third data comprises the second data and a CRC sequence corresponding to the second data, and the transport block specifically comprises the first data and the third data.

7. The method according to claim 6, wherein the method further comprises:
encoding the third data through the first protocol layer module by using a third code rate, to obtain fourth data, wherein the transport block specifically comprises the first data and the fourth data;
obtaining the transport block from the first protocol layer module through a second protocol layer module; and
encoding the transport block through the second protocol layer module by using the first code rate, to obtain the encoded data, wherein the second code rate is determined by using the first code rate and the third code rate.

8. The method according to claim 6, wherein the method further comprises:
obtaining fifth indication information and the transport block from the first protocol layer module through a second protocol layer module, wherein the fifth indication information indicates the first data and/or the third data in the transport block; and
encoding the first data through the second protocol layer module by using the first code rate, and encoding the third data by using the second code rate, to obtain the encoded data.

9. The method according to any one of claims 1 to 5, wherein the method further comprises:
obtaining sixth indication information and the transport block from a first protocol layer module through a second protocol layer module, wherein the sixth indication information indicates the first data and/or the second data in the transport block;
obtaining third data based on the second data through the second protocol layer module, wherein the third data comprises the second data and a CRC sequence corresponding to the second data; and
encoding the first data through the second protocol layer module by using the first code rate, and encoding the third data by using the second code rate, to obtain the encoded data.

10. The method according to any one of claims 7 to 9, wherein the first protocol layer module is a medium access control MAC layer module or a radio link control RLC layer module, and/or the second protocol layer module is a physical layer module.

11. A data transmission method, wherein the method is performed by a second communication apparatus, and comprises:
receiving encoded data from a first communication apparatus, wherein the encoded data is obtained by encoding a transport block, the transport block comprises first data and second data, the first data supports transmission error correction based on an information meaning represented by data, the second data does not support transmission error correction based on an information meaning represented by data, a code rate of the first data is a first code rate, a code rate of the second data is a second code rate, and the first code rate is greater than the second code rate; and
decoding the encoded data, to obtain the first data and the second data in the transport block.

12. The method according to claim 11, wherein the method comprises:
receiving first indication information and second indication information from the first communication apparatus, wherein the first indication information indicates the first code rate, and the second indication information indicates the second code rate.

13. The method according to claim 11 or 12, wherein the method further comprises:
receiving third indication information from the second communication apparatus, wherein the third indication information indicates the first data and/or the second data in the transport block.

14. The method according to claim 13, wherein
the third indication information specifically indicates a length of the first data and/or a length of the second data; or
the third indication information specifically indicates a first identifier in a plurality of identifiers, the plurality of identifiers correspond to a plurality of lengths, and a length corresponding to the first identifier is a length of the first data or a length of the second data; or
the third indication information specifically indicates a proportion of the first data in the transport block, and/or indicates a proportion of the second data in the transport block; or
the third indication information specifically indicates a second identifier in a plurality of identifiers, the plurality of identifiers correspond to a plurality of proportions, and a proportion corresponding to the second identifier is a proportion of the first data in the transport block or a proportion of the second data in the transport block.

15. The method according to any one of claims 11 to 14, wherein the method further comprises:
decoding the encoded data through a second protocol layer module by using the first code rate, to obtain the transport block, wherein the transport block comprises the first data and fourth data;
obtaining the transport block from the second protocol layer module through a first protocol layer module; and
decoding the fourth data through the first protocol layer module by using a third code rate, to obtain the second data and a CRC sequence corresponding to the second data, wherein the second code rate is determined by using the first code rate and the third code rate.

16. The method according to any one of claims 11 to 14, wherein the method further comprises:
decoding sixth data in the encoded data through a second protocol layer module by using the first code rate, to obtain the first data; and
decoding seventh data in the encoded data through the second protocol layer module by using the second code rate, to obtain third data, wherein the third data comprises the second data and a CRC sequence corresponding to the second data.

17. The method according to claim 16, wherein the method further comprises:
determining, through the second protocol layer module based on the CRC sequence corresponding to the second data and the second data, whether the second data is correctly transmitted.

18. The method according to claim 15 or 16, wherein the method further comprises:
determining, through the first protocol layer module based on the CRC sequence corresponding to the second data and the second data, whether the second data is correctly transmitted.

19. The method according to claim 15 or 18, wherein the first protocol layer module is a medium access control MAC layer module or a radio link control RLC layer module, and/or the second protocol layer module is a physical layer module.

20. A communication apparatus, comprising a processor and a memory, wherein the memory is coupled to the processor, and the processor is configured to perform the method according to any one of claims 1 to 10.

21. A communication apparatus, comprising a processor and a communication interface, wherein the processor performs the method according to any one of claims 1 to 10 through the communication interface.

22. A communication apparatus, comprising a processor and a memory, wherein the memory is coupled to the processor, and the processor is configured to perform the method according to any one of claims 11 to 19.

23. A communication apparatus, comprising a processor and a communication interface, wherein the processor performs the method according to any one of claims 11 to 19 through the communication interface.

24. A communication system, comprising the communication apparatus according to claim 20 or 21 and the communication apparatus according to claim 22 or 23.

25. A computer-readable storage medium, comprising a computer program, wherein when the computer program is run on a computer, the computer is enabled to perform the method according to any one of claims 1 to 19.

26. A computer program product, wherein the computer program product comprises a computer program; and when the computer program is run, a computer is enabled to perform the method according to any one of claims 1 to 19.
